# EUROPÄISCHE PATENTSCHRIFT

(11) **EP 3 767 405 B1**
(45) Veröffentlichungstag und Bekanntmachung des Hinweises auf die Patenterteilung: **19.11.2025**
(21) Anmeldenummer: 20183482.7
(22) Anmeldetag: 01.07.2020
(51) Int. Cl.: G05B 19/042, G05B 19/409

(54) **BEDIENVORRICHTUNG UND VERFAHREN ZUM BEDIENEN UND STEUERN EINER NUMERISCH GESTEUERTEN WERKZEUGMASCHINE**
OPERATING DEVICE AND METHOD FOR OPERATING AND CONTROLLING A NUMERICALLY CONTROLLED MACHINE TOOL
DISPOSITIF DE MANIPULATION ET PROCÉDÉ DE MANIPULATION ET DE COMMANDE D'UNE MACHINE-OUTIL À COMMANDE NUMÉRIQUE

(30) Priorität: 19.07.2019 DE 102019210781
(43) Veröffentlichungstag der Anmeldung: 20.01.2021
(73) Patentinhaber: DMG MORI Digital GmbH, 33689 Bielefeld (DE)
(72) Erfinder: DORETH, Karl, 30163 Hannover (DE); LOCHBIHLER, Thomas, 6682 Vils (AT)
(74) Vertreter: MERH-IP Matias Erny Reichl Hoffmann Patentanwälte PartG mbB

(56) Entgegenhaltungen:
- EP-A1- 2 891 020
- EP-B1- 2 891 020
- DE-A1- 102011 082 988
- DMG MORI: "DMGMORI.COM DMU 200 Gantry DMU 340 Gantry LARGE MACHINING CENTERS IN GANTRY DESIGN Gantry series", 17 May 2019 (2019-05-17), XP055743008, Retrieved from the Internet <URL:https://en.dmgmori.com/resource/blob/70044/9eebe0757c2d1a9eedb424ff7b296688/pm0uk-200-340-grantry-pdf-data.pdf> [retrieved on 20201022]

## Beschreibung

Die vorliegende Erfindung betrifft eine Bedienvorrichtung zum Einsatz an einer numerisch gesteuerten Werkzeugmaschine und weiterhin insbesondere Systeme, Vorrichtungen und Verfahren zum Bedienen und Steuern einer oder mehrerer numerisch gesteuerter Werkzeugmaschinen in einem Fertigungssystem.

### Hintergrund

Im Stand der Technik ist es bekannt, die Werkstückbearbeitung an numerisch gesteuerten Werkzeugmaschinen mittels einer NC-Steuereinrichtung zu steuern, die zumeist an der Werkzeugmaschine integriert ist. Insbesondere steuert die NC-Steuereinrichtung steuerbare Aktoren, z.B. Spindelantriebe, Achsantriebe von Achsen der Werkzeugmaschine und weitere Maschinenfunktionen der Werkzeugmaschine, z.B. auf Basis eines durch ein CAD/CAM-System generierten oder eines Maschinenbedieners programmierten NC-Programms.

In der EP 2 891 020 A1 wurde eine erweiterte Steuerung einer numerisch gesteuerten Werkzeugmaschine vorgeschlagen, bei der übergeordnet zu der NC-Steuereinrichtung eine weitere Steuerungseinrichtung bzw. Bedieneinrichtung vorgesehen ist, die die Bedienung bzw. Steuerung des Bedieners der Werkzeugmaschine gegenüber den Funktionen einer NC-Steuereinrichtung erweitert.

Die EP 2 8901 020 A1 zeigt ein Steuerungssystem zur Steuerung des Betriebs einer numerisch gesteuerten Werkzeugmaschine, wobei das System eine Back-End-Steuerungsvorrichtung und eine Front-End-Steuerungsvorrichtung umfasst, die kommunikativ mit der Back-End-Steuerungsvorrichtung verbunden ist. Die Back-End-Steuerungsvorrichtung umfasst eine numerische Steuerung, eine programmierbare logische Steuerung, eine erste Kommunikationsschnittstelle, die kommunizierend mit der numerischen Steuerung und der programmierbaren logischen Steuerung verbunden ist, und ein Schnittstellenservermodul einer zweiten Kommunikationsschnittstelle, die kommunizierend mit der ersten Kommunikationsschnittstelle verbunden ist. Die Front-End-Steuervorrichtung umfasst ein Schnittstellen-Client-Modul der zweiten Kommunikationsschnittstelle, das angepasst ist, um kommunikativ mit dem Schnittstellen-Server-Modul verbunden zu werden, eine zweite Verarbeitungseinrichtung zum Ausführen eines zweiten Betriebssystems, eine Basismodulanwendung und eine Vielzahl von Steueranwendungen, wobei die Basismodulanwendung zum Zugreifen auf Daten in der numerischen Steuerung und der speicherprogrammierbaren Steuerung über das eine oder die mehreren Schnittstellen-Client-Module dient, das Schnittstellenservermodul und die erste Kommunikationsschnittstelle, eine Anzeigeeinheit zum Anzeigen eines oder mehrerer Steuerbildschirme für einen Benutzer, eine Eingabeeinheit zum Empfangen von Steuereingabeoperationen von dem Benutzer und eine erste Mensch-Maschine-Schnittstelle, die kommunikativ mit der Anzeigeeinheit und der Eingabeeinheit verbunden ist und eine erste grafische Benutzerschnittstelle zum Steuern des einen oder der mehreren auf der Anzeigeeinheit angezeigten Steuerbildschirme und zum Verarbeiten von Steuereingabeoperationen des Benutzers enthält.

In DMG Mori: "DMGMORI.COM DMU 200 Gantry DMU 340 Gantry LARGE MACHINING CENTERS IN GANTRY DESIGN Gantry series", 17. Mai 2019, XP055743008 wird ein Job Manager gezeigt, der eine maschinenbasierte Erzeugung und Konfiguration von neuen Aufträgen erlaubt. Außerdem ermöglicht der Job Manager eine strukturierte Speicherung von allen produktionsrelevanten Daten und Dokumenten. Ein weiteres Feature des Job Managers ist, dass Orderdaten automatisiert importiert werden können mittels einer "Job Import Funktion".

Ausgehend von der EP 2 891 020 A1 ist es eine Aufgabe der vorliegenden Erfindung, ein System, eine Vorrichtung bzw. ein Verfahren bereitzustellen, mit dem die Bedienung bzw. Steuerung einer Werkzeugmaschine erweitert und verbessert wird, insbesondere hinsichtlich der Bedienbarkeit der Werkzeugmaschine hinsichtlich Werkstückbearbeitung und anderer Maschinenfunktionen.

### Zusammenfassung

Zur Lösung der vorstehend beschriebenen Aufgabe werden eine Bedieneinrichtung zum Einsatz an einer numerisch gesteuerten Werkzeugmaschine gemäß Anspruch 1 sowie Systeme, Vorrichtungen bzw. Verfahren gemäß den unabhängigen Ansprüchen vorgeschlagen. Abhängige Ansprüche betreffen bevorzugte bzw. besonders zweckdienliche Ausführungsbeispiele.

Eine Bedienvorrichtung zum Einsatz an einer numerisch gesteuerten Werkzeugmaschine, mit einer Datenverarbeitungseinrichtung, ist insbesondere dazu eingerichtet, Steuer- und Bedienanwendungen auszuführen, einer Steuerungsschnittstelle, über die die Datenverarbeitungseinrichtung mit einer Steuereinrichtung der Werkzeugmaschine kommunikativ verbindbar ist, und/oder einer Benutzerschnittstelle, die dazu eingerichtet ist, Eingabeinformationen gemäß Bedieneingaben eines Bedieners der Werkzeugmaschine anzunehmen und an die Datenverarbeitungseinrichtung zu übermitteln und/oder von der Datenverarbeitungseinrichtung übermittelte Ausgabeinformationen an den Bediener auszugeben.

Die Datenverarbeitungseinrichtung ist dazu eingerichtet, einen Bearbeitungsauftrag zur Bearbeitung eines oder mehrerer Werkstücke an der Werkzeugmaschine auf Grundlage einer Bearbeitungsschrittsequenz, insbesondere einer von dem Bediener über die Benutzerschnittstelle anwählbaren Bearbeitungsschrittsequenz, zu steuern und/oder entsprechende Maschinen- bzw. Steuerfunktionen über die Steuerungsschnittstelle an der Steuereinrichtung aufzurufen.

Die Datenverarbeitungseinrichtung ist dazu eingerichtet, den Bearbeitungsauftrag auf Grundlage von in einer Datenspeichervorrichtung der Bedieneinrichtung gespeicherten Bearbeitungsschrittsequenzdaten, die der Bearbeitungsschrittsequenz zugeordnet sind, zu steuern.

Die Bearbeitungsschrittsequenzdaten geben eine Mehrzahl von Bearbeitungsschritten und/oder eine vorgegebene Reihenfolge der Mehrzahl von Bearbeitungsschritten an bzw. vor.

Die Mehrzahl von Bearbeitungsschritten umfasst zumindest einen oder mehrere aus:
- einen der Bearbeitungsschrittsequenz zugeordneten Bearbeitungsauftrag annehmen,
- ein oder mehrere für den Bearbeitungsauftrag erforderliche Spannmittel an der Werkzeugmaschine rüsten bzw. vorbereiten,
- ein oder mehrere für den Bearbeitungsauftrag erforderliche Werkzeuge an der Werkzeugmaschine einrichten,
- ein oder mehrere für den Bearbeitungsauftrag erforderliche Werkzeuge an der Werkzeugmaschine laden bzw. vorbereiten,
- ein oder mehrere für den Bearbeitungsauftrag erforderliche NC-Codes, NC-Programme und/oder NC-Programmabschnitte laden und/oder programmieren,
- ein oder mehrere für den Bearbeitungsauftrag erforderliche NC-Codes, NC-Programme und/oder NC-Programmabschnitte ausführen,
- eine Prozessüberwachungsanwendung ausführen,
- einen oder mehrere dem Bearbeitungsauftrag zugeordnete Bearbeitungsprozesse dokumentieren,
- eine automatisierte Qualitätsprüfung eines oder mehrerer bearbeiteter Werkstücke durchführen, und /oder
- Abgeben des Bearbeitungsauftrags- automatisches Zusammenstellen von Werkstückpaletten,
- automatisiertes Beladen von Werkstückpaletten,
- automatisches Umsortieren von Werkstücken auf Werkstückpaletten,
- Einstellen einer Spannlage eines Werkstücks,
- Wechseln von einer Spannlage auf eine andere Spannlage,
- automatisches Vermessen von Werkstücken,
- automatisches Beladen eines Werkzeugmagazins der Werkzeugmaschine,
- automatisiertes Einrichten von Werkzeugen an der Werkzeugmaschine,
- automatisches Umsortieren von Werkzeugen am Werkzeugmagazin, und/oder
- Durchführen einer oder mehrerer Reinigungs- Wartungs-, Instandhaltungs- und/oder Serviceanwendungen an der Werkzeugmaschine.

In bevorzugten Ausführungsbeispielen geben die Bearbeitungsschrittsequenzdaten für jeden Bearbeitungsschritt der Bearbeitungsschrittsequenz eine zugeordnete Bearbeitungsschrittanwendung an. Bevorzugt ist die Datenverarbeitungseinrichtung dazu eingerichtet, zum Steuern eines Bearbeitungsschritts die jeweils zugeordnete Bearbeitungsschrittanwendung auszuführen.

In bevorzugten Ausführungsbeispielen umfasst die Bedieneinrichtung weiterhin eine Netzwerkschnittstelle, die dazu eingerichtet ist, die Bedienvorrichtung über ein Kommunikationsnetzwerk mit einem oder mehreren Servern zu verbinden.

In bevorzugten Ausführungsbeispielen ist die Datenverarbeitungseinrichtung dazu eingerichtet, wenn zumindest einer der Server das Ausführen von Bearbeitungsschrittanwendung als Webanwendungen gemäß einer Client-Server-Kommunikation bereitstellt, zum Steuern eines Bearbeitungsschritts die zugeordnete Bearbeitungsschrittanwendung als Webanwendung gemäß der Client-Server-Kommunikation mit dem zumindest einen Server über die Netzwerkschnittstelle auszuführen.

In bevorzugten Ausführungsbeispielen ist die Datenverarbeitungseinrichtung dazu eingerichtet, zum Ausführen einer einem Bearbeitungsschritt der Bearbeitungsschrittsequenz zugeordneten Bearbeitungsschrittanwendung erforderliche Eingabeinformationen über die Benutzerschnittstelle von dem Bediener abzufragen, insbesondere über eine graphische Benutzeroberfläche.

Bevorzugt ist jeder Bearbeitungsschrittanwendung eine separate Benutzeranwendung einer graphische Benutzeroberfläche zugeordnet, insbesondere eine jeweils separate Widget-Anwendung.

Bevorzugt ist die Datenverarbeitungseinrichtung dazu eingerichtet, zum Ausführen einer einem Bearbeitungsschritt der Bearbeitungsschrittsequenz zugeordneten Bearbeitungsschrittanwendung erforderliche Eingabedaten über die Netzwerkschnittstelle von einem oder mehreren Servern einzuholen bzw. zu laden.

Bevorzugt umfassen die Eingabedaten eines oder mehrere aus:
- Modelldaten, die ein CAD-Modell eines oder mehrerer Werkstücke, eines oder mehrerer Werkstückteile und/oder eines oder mehrerer Werkzeuge angeben,
- NC-Daten, die einen oder mehrere NC-Codes, ein oder mehrere NC-Programme und/oder einen oder mehrere NC-Programmabschnitte angeben,
- Auftragsdaten, die einer Werkstückbearbeitung zugeordnete Auftragsdaten angeben,
- Werkzeugdaten, die Informationen zu einem oder mehreren zugeordneten Werkzeugen angeben,
- Werkzeuglistendaten, die eine Liste von einem Bearbeitungsauftrag bzw. einer Werkstückbearbeitung zugeordneten Werkzeugen angeben,
- Spannmitteldaten, die Informationen zu einem oder mehreren zugeordneten Spannmitteln angeben, und/oder
- Spannmittellistendaten, die eine Liste von einem Bearbeitungsauftrag bzw. einer Werkstückbearbeitung zugeordneten Spannmitteln angeben.

In bevorzugten Ausführungsbeispielen ist die Datenverarbeitungseinrichtung dazu eingerichtet, vor Ausführen einer Bearbeitungsschrittsequenz zu überprüfen bzw. zu bestätigen, ob bzw. dass für jede den Bearbeitungsschritten jeweils zugeordnete Bearbeitungsschrittanwendung erforderliche Eingabedaten vorliegen, insbesondere durch erfolgte Eingabe des Bedieners, durch Vorliegen von ladbaren Eingabedaten und/oder durch Ausgabedaten einer vorher auszuführenden Bearbeitungsschrittanwendung.

In bevorzugten Ausführungsbeispielen ist die Datenverarbeitungseinrichtung dazu eingerichtet, vor Ausführen einer Bearbeitungsschrittsequenz zu überprüfen bzw. zu bestätigen, ob bzw. dass der Bediener die erforderliche Autorisierung aufweist für alle von Bearbeitungsschrittanwendung der Bearbeitungsschrittsequenz an der Steuereinrichtung aufzurufenden Steuer- und/oder Maschinenfunktionen.

In bevorzugten Ausführungsbeispielen ist die Datenverarbeitungseinrichtung dazu eingerichtet, eine durch den Bediener über die Benutzerschnittstelle bedienbare Editor-Anwendung auszuführen, die dem Bediener das Erstellen, Speichern und/oder Ändern von Bearbeitungsschrittsequenzen erlaubt.

In bevorzugten Ausführungsbeispielen ist die Datenverarbeitungseinrichtung dazu eingerichtet, vor Speichern einer Bearbeitungsschrittsequenz zu überprüfen bzw. zu bestätigen, ob bzw. dass für jede den Bearbeitungsschritten jeweils zugeordnete Bearbeitungsschrittanwendung erforderliche Eingabedaten vorliegen, insbesondere durch mögliche Eingabe des Bedieners, durch Vorliegen von ladbaren Eingabedaten und/oder durch Ausgabedaten einer vorher auszuführenden Bearbeitungsschrittanwendung.

In bevorzugten Ausführungsbeispielen ist die Bedienvorrichtung als mobile Bedienvorrichtung ausgebildet, die dazu eingerichtet ist, über die Steuerungsschnittstelle drahtlos mit der Steuereinrichtung zu kommunizieren.

In weiteren Aspekten werden vorgeschlagen:
Eine Steuervorrichtung zum Einsatz an einer numerisch gesteuerten Werkzeugmaschine mit einer Steuereinrichtung zum Steuern von Maschinenfunktionen der Werkzeugmaschine und einer mit der Steuereinrichtung verbundenen bzw. verbindbaren Bedienvorrichtung gemäß einem der vorstehenden Aspekte und/oder eine Werkzeugmaschine mit einer derartigen Steuervorrichtung.

Ein Verfahren an einer Bedienvorrichtung gemäß einem der vorstehenden Aspekte, umfassend: Steuern eines Bearbeitungsauftrags zur Bearbeitung eines oder mehrerer Werkstücke an der Werkzeugmaschine auf Grundlage einer von dem Bediener über die Benutzerschnittstelle anwählbaren Bearbeitungsschrittsequenz und Aufrufen entsprechender Maschinen- bzw. Steuerfunktionen über die Steuerungsschnittstelle an der Steuereinrichtung.

Ein Computerprogrammprodukt, umfassend Befehle, die bei der Ausführung des Programms durch einen mit einer numerisch gesteuerten Werkzeugmaschine verbundenen Computer bzw. eine Steuervorrichtung einer numerisch gesteuerten Werkzeugmaschine diesen bzw. diese veranlassen, das vorstehende Verfahren auszuführen.

Weitere Aspekte und deren Vorteile als auch Vorteile und speziellere Ausführungsmöglichkeiten der vorstehend beschriebenen Aspekte und Merkmale werden aus den folgenden, jedoch in keinster Weise einschränkend aufzufassenden Beschreibungen und Erläuterungen zu den angehängten Figuren beschrieben.

### Kurzbeschreibung der Figuren

Fig. 1 zeigt eine schematische, beispielhafte Darstellung eines Systems zum Bedienen und Steuern einer oder mehrerer numerisch gesteuerter Werkzeugmaschinen gemäß einem Ausführungsbeispiel der vorliegenden Erfindung.
Fig. 2 zeigt eine schematische, beispielhaft Darstellung einer Bedieneinrichtung gemäß einem Ausführungsbeispiel der vorliegenden Erfindung.
Figs. 3A und 3B zeigen schematische, beispielhafte Bildschirmeinteilungen einer graphischen Benutzeroberfläche einer Bedieneinrichtung gemäß einem Ausführungsbeispiel der vorliegenden Erfindung.
Fig. 4 zeigt eine schematische, beispielhaft Darstellung eines Web-Servers gemäß einem Ausführungsbeispiel der vorliegenden Erfindung.
Fig. 5 zeigt eine schematische, beispielhaft Darstellung eines Datenbank-Servers gemäß einem Ausführungsbeispiel der vorliegenden Erfindung.
Fig. 6 zeigt eine schematische, beispielhaft Darstellung eines CAD/CAM-System-Servers gemäß einem Ausführungsbeispiel der vorliegenden Erfindung.
Fig. 7 zeigt eine schematische beispielhafte Darstellung der Datenspeichereinrichtung eines CAD/CAM-System-Servers gemäß einem Ausführungsbeispiel der vorliegenden Erfindung.
Fig. 8 zeigt eine schematische beispielhafte Darstellung der Datenspeichereinrichtung eines Datenbank-Servers gemäß einem Ausführungsbeispiel der vorliegenden Erfindung.
Figs. 9A bis 9C zeigen schematisch beispielhafte Bearbeitungsschrittsequenzen gemäß Ausführungsbeispielen.
Fig. 10 zeigt eine schematische beispielhafte Darstellung der Datenspeichereinrichtung eines Web-Servers gemäß einem Ausführungsbeispiel der vorliegenden Erfindung.
Fig. 11 zeigt eine schematische beispielhafte Darstellung der Datenspeichereinrichtung einer Bedieneinrichtung gemäß einem Ausführungsbeispiel der vorliegenden Erfindung.
Fig. 12 zeigt beispielhaft schematisch einen Auftragsauswahlbildschirm einer graphischen Benutzeroberfläche der Benutzerschnittstelle der Bedieneinrichtung der Werkzeugmaschine gemäß einem Ausführungsbeispiel der vorliegenden Erfindung.
Fig. 13 zeigt beispielhaft schematisch einen Werkzeugprüfbildschirm der graphischen Benutzeroberfläche der Benutzerschnittstelle der Bedieneinrichtung der Werkzeugmaschine gemäß einem Ausführungsbeispiel der vorliegenden Erfindung.
Fig. 14 zeigt beispielhaft schematisch einen Werkzeugladebildschirm der graphischen Benutzeroberfläche der Benutzerschnittstelle der Bedieneinrichtung der Werkzeugmaschine gemäß einem Ausführungsbeispiel der vorliegenden Erfindung.
Fig. 15 zeigt beispielhaft schematisch einen NC-Code-Ladebildschirm der graphischen Benutzeroberfläche der Benutzerschnittstelle der Bedieneinrichtung der Werkzeugmaschine gemäß einem Ausführungsbeispiel der vorliegenden Erfindung.

### Detaillierte Beschreibung der Figuren und bevorzugter Ausführungsbeispiele

Im Folgenden werden Beispiele bzw. Ausführungsbeispiele der vorliegenden Erfindung detailliert unter Bezugnahme auf die beigefügten Figuren beschrieben. Gleiche bzw. ähnliche Elemente in den Figuren können hierbei mit gleichen Bezugszeichen bezeichnet sein, manchmal allerdings auch mit unterschiedlichen Bezugszeichen.

Es sei hervorgehoben, dass die vorliegende Erfindung jedoch in keinster Weise auf die im Folgenden beschriebenen Ausführungsbeispiele und deren Ausführungsmerkmale begrenzt bzw. eingeschränkt ist.

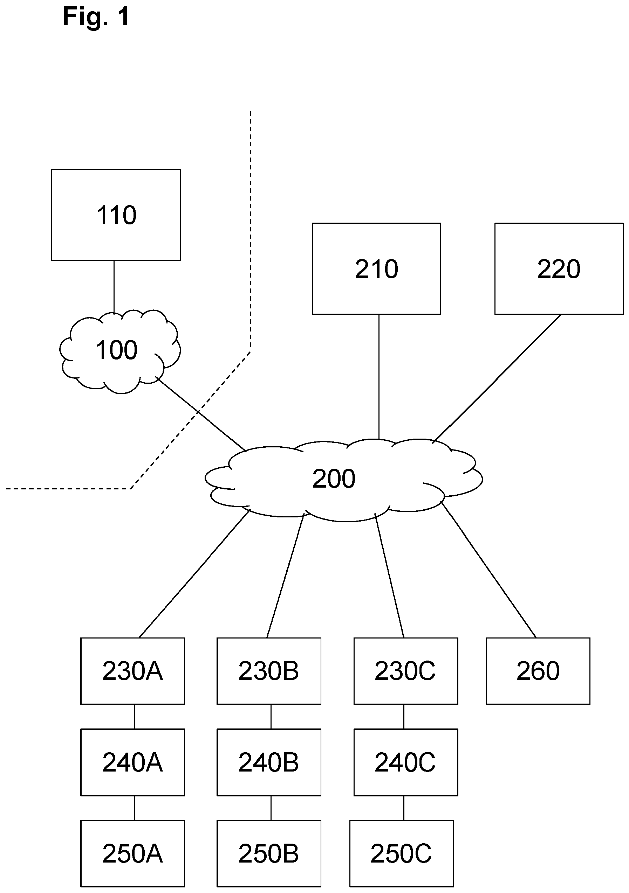

Fig. 1 zeigt eine schematische, beispielhafte Darstellung eines Systems zum Bedienen und Steuern einer oder mehrerer numerisch gesteuerter Werkzeugmaschinen gemäß einem Ausführungsbeispiel der vorliegenden Erfindung.

Das System gemäß Fig. 1 umfasst beispielhaft einen Web-Server 110, der beispielhaft mit einem Kommunikationsnetzwerk 100, beispielhaft dem Internet, einem Cloud-Service-Netzwerk oder einem lokalen Netzwerk, verbunden ist.

Weiterhin umfasst das System gemäß Fig. 1 beispielhaft einen Datenbank-Server 210 und einen CAD/CAM-System-Server 220, die beispielhaft mit einem Kommunikationsnetzwerk 200, bevorzugt einem lokalen Netzwerk (z.B. LAN, WLAN, etc.), verbunden sind.

Beispielhaft ist das Kommunikationsnetzwerk 200 in Fig. 1 mit dem Kommunikationsnetzwerk 100 verbunden, wobei beispielhaft eine Firewall (gestrichelte Linie) zwischen dem Kommunikationsnetzwerk 100 und dem Kommunikationsnetzwerk 200 vorgesehen ist.

Das System gemäß Fig. 1 umfasst weiterhin beispielhaft eine numerisch gesteuerte Werkzeugmaschine 250A (z.B. eine Fräsmaschine, eine Universal-Fräsmaschine, ein Bearbeitungszentrum, eine Fräs-/Drehmaschine, eine Drehmaschine, ein Drehzentrum, eine Schleifmaschine, eine Verzahnungsmaschine, eine Auftragsmaschine für Additive Manufacturing, etc.) mit einer der Werkzeugmaschine 250A zugeordneten NC-Steuereinrichtung 240A, die mit der Werkzeugmaschine 250A bzw. bevorzugt mit steuerbaren Aktoren und Sensoren der Werkzeugmaschine 250A verbunden ist, und die dazu eingerichtet ist, die Werkzeugmaschine 250A bzw. Funktionen der Werkzeugmaschine 250A zu steuern. Die Steuereinrichtung 240A kann beispielhaft an der Werkzeugmaschine 250A integriert sein.

Weiterhin umfasst das System gemäß Fig. 1 beispielhaft eine der Werkzeugmaschine 250A zugeordnete Bedieneinrichtung 230A, die mit der der Werkzeugmaschine 250A zugeordneten Steuereinrichtung 240A verbunden ist. Die Bedieneinrichtung 230A ist zudem beispielhaft mit dem Kommunikationsnetzwerk 200 verbunden. Beispielhaft ist die Bedieneinrichtung 230A dazu eingerichtet, über das Kommunikationsnetzwerk 200 mit dem Datenbank-Server 210 und dem CAD/CAM-System-Server 220 zu kommunizieren.

Weiterhin ist die Bedieneinrichtung 230A beispielhaft dazu eingerichtet, über das Kommunikationsnetzwerk 200 und das Kommunikationsnetzwerk 100 mit dem Web-Server 110 zu kommunizieren.

Beispielhaft umfasst das System gemäß Fig. 1 zudem weitere numerisch gesteuerte Werkzeugmaschinen 250B und 250C jeweils mit entsprechend zugeordneten Steuereinrichtungen 240B und 240C sowie jeweils mit entsprechend zugeordneten Bedieneinrichtungen 230B und 230C.

Beispielhaft ist die Bedieneinrichtung 230A dazu eingerichtet, über das Kommunikationsnetzwerk 200 mit den Bedieneinrichtungen 230B und 230C der jeweiligen Werkzeugmaschinen 250B und 250C zu kommunizieren, und beispielhaft umgekehrt.

Weiterhin umfasst das System gemäß Fig. 1 beispielhaft eine separate Bedieneinrichtung 260 (z.B. ein Benutzercomputer, wie z.B. ein Laptop, Desktop-PC, Tablet, oder auch ein Smartphone), die mit dem Kommunikationsnetzwerk 200 verbunden ist.

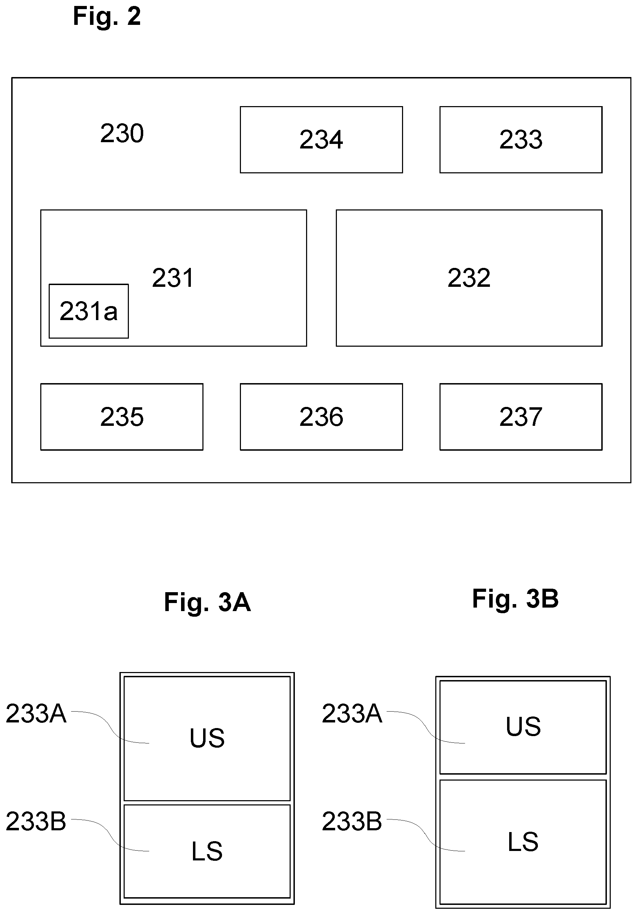

Fig. 2 zeigt eine schematische, beispielhaft Darstellung einer Bedieneinrichtung 230 gemäß einem Ausführungsbeispiel der vorliegenden Erfindung. Im System gemäß Fig. 1 ist bevorzugt jede der Bedieneinrichtungen 230A, 230B und 230C analog aufgebaut. Die Bedieneinrichtung 230 kann mittels eines Computers (z.B. ein in einem Bedienpult der Werkzeugmaschine oder in der Werkzeugmaschine integrierter Front-End-PC) ausgebildet bzw. bereitgestellt sein.

Beispielhaft umfasst die Bedieneinrichtung 230 eine Datenverarbeitungs-einrichtung 231 (z.B. mit einem oder mehreren Prozessoren 231a) und eine Datenspeichereinrichtung 232 zum Speichern von durch die Datenverarbeitungs-einrichtung 231 ausführbaren Programmen und weiteren Daten (siehe spätere Beschreibung).

Des Weiteren umfasst die Bedieneinrichtung 230 beispielhaft eine Benutzerschnittstelle 233 (Human Machine Interface / Benutzerschnittstelleneinrichtung) zur Bedienung durch einen Bediener (z.B. Maschinenbediener) und eine Netzwerkschnittstelle 234 zur Herstellung einer kommunikativen Verbindung mit dem Netzwerk 200 bzw. mit dem Netzwerk 100.

Die Benutzerschnittstelle 233 umfasst bevorzugt eine graphische Benutzeroberfläche (Graphical User Interface bzw. GUI) für den Bediener (z.B. umfassend ein Ausgabefunktionen über einen Bildschirm und Eingabefunktionen über Eingabegeräte, z.B. umfassend eine Maus, eine Tastatur, einen oder mehrere an dem Bildschirm implementierte Touch-Screens, Softkeys, Drehknöpfe, Drehregler, und/oder Tasten, usw., und ggf. Ausgabefunktionen über weitere Ausgabegeräte wie z.B. LED-Informationsfelder, Leuchten, Lampen, Warnlichter, Audioausgänge, usw.)

Weiterhin umfasst die Bedieneinrichtung 230 beispielhaft eine NC-Schnittstelle 235 zur Kommunikation mit der numerischen Steuerung (NC) der zugeordneten Werkzeugmaschine 250 an der entsprechenden (NC-)Steuerungseinrichtung 240 der Werkzeugmaschine 250. Typischerweise kann die Steuerungseinrichtung 240 an der Werkzeugmaschine 250 implementiert sein. Hardwaretechnisch kann die Steuerungseinrichtung 240 in Ausführungsbeispielen z.B. an einem Computer ausgebildet sein, wie z.B. an dem gleichen Computer wie die Bedieneinrichtung 230. Alternativ kann die Steuerungseinrichtung 240 an einem eigenen Computer implementiert sein, z.B. an einem Back-End-PC der Werkzeugmaschine, der z.B. an der Werkzeugmaschine integriert sein kann.

Weiterhin umfasst die Bedieneinrichtung 230 beispielhaft eine PLC-Schnittstelle 236 zur Kommunikation mit einer PLC ("Programmable Logic Control", bzw. SPS für Speicherprogrammierbare Steuerung) der Werkzeugmaschine (z.B. zum direkten Auslesen von Zustandswerten bzw. Parametern aus einem oder mehreren PLC-Registern und/oder zum direkten Ausgeben von Steuersignalen an die PLC der Werkzeugmaschine). Alternativ (oder zusätzlich) können in weiteren Ausführungsbeispielen die Daten von der PLC indirekt von der NC-Steuerung bzw. über die NC-Schnittstelle 235 eingelesen werden.

Weiterhin umfasst die Bedieneinrichtung 230 beispielhaft eine Sensorschnittstelle 237 die direkt mit Sensoren oder einem Sensor-Bus-System der Werkzeugmaschine verbunden sein kann, z.B. zum direkten Auslesen von Sensorsignalen von Sensoren der Werkzeugmaschine (z.B. Positionssensoren, Temperatursensoren, Motorstromsensoren, Drucksensoren von Hydraulik- und/oder Pneumatiksystemen der Werkzeugmaschine, Drucksensoren der inneren und/oder äußeren Kühlmittelzufuhr, etc.). Alternativ (oder zusätzlich) können in weiteren Ausführungsbeispielen die Sensorsignale bzw. Sensordaten indirekt von der NC-Steuerung bzw. über die NC-Schnittstelle 235 eingelesen werden.

Figs. 3A und 3B zeigen schematische, beispielhafte Bildschirmeinteilungen der graphischen Benutzeroberfläche 233 der Bedieneinrichtung 320 gemäß einem Ausführungsbeispiel der vorliegenden Erfindung.

Beispielhaft zeigen Figs. 3A und 3B die Bildschirmeinteilung derart, dass jeweils ein Upper Screen US (oberer Bildschirmbereich) und ein Lower Screen LS (unterer Bildschirmbereich) umfasst ist. Beispielhaft hat der Upper Screen US in Fig. 3A ein Bildverhältnis von 4:3 und der Lower Screen ein Bildverhältnis von 16:9. Beispielhaft hat der Upper Screen US in Fig. 3B ein Bildverhältnis von 16:9 und der Lower Screen ein Bildverhältnis von 4:3. Andere Bildschirmeinteilungen sind möglich, auch mit nebeneinander angeordneten Bildschirmbereichen und mit mehr als zwei Bildschirmbereichen.

Die graphische Benutzeroberfläche 233 der Bedieneinrichtung 320 ist beispielhaft dazu eingerichtet, an einem ersten Bildschirmbereich 233A (oder 233B) der zwei oder mehr Bildschirmbereiche eine graphische Benutzeroberfläche einer an der Bedieneinrichtung 320 ausgeführten Anwendung darzustellen und an einem zweiten Bildschirmbereich 233B (oder 233A) der zwei oder mehr Bildschirmbereiche eine von der Steuereinrichtung 240 über die NC-Schnittstelle 235 übermittelte Bildschirmdarstellung (bevorzugt in Vollbilddarstellung) darzustellen, d.h. eine sog. NC-Control-Screen-Abbildung der NC Steuerung.

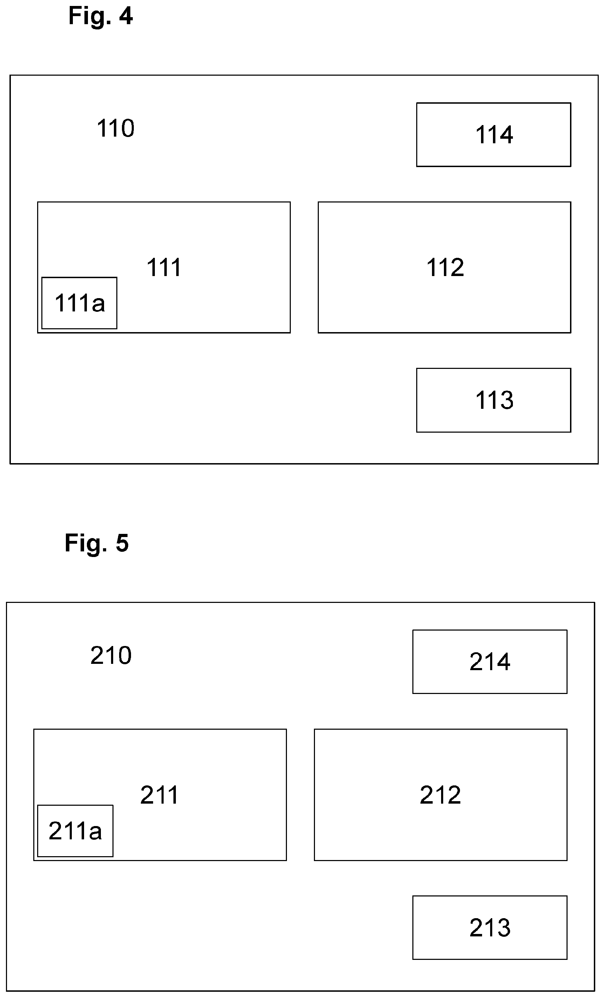

Fig. 4 zeigt eine schematische, beispielhaft Darstellung eines Web-Servers 110 gemäß einem Ausführungsbeispiel der vorliegenden Erfindung.

Beispielhaft umfasst der Web-Server 110 eine Datenverarbeitungseinrichtung 111 (z.B. mit einem oder mehreren Prozessoren 111a) und eine Datenspeichereinrichtung 112 zum Speichern von durch die Datenverarbeitungseinrichtung 111 ausführbaren Programmen und weiteren Daten (siehe spätere Beschreibung).

Des Weiteren umfasst der Web-Server 110 beispielhaft eine Dateneingabeschnittstelle 114 mittels der web-basierte Daten und web-basierte Anwendungen an der Datenspeichereinrichtung 112 durch einen oder mehrere Anbieter bereitgestellt werden können, z.B. durch einen oder mehrere Werkzeugmaschinenhersteller, einen oder mehrere Steuerungshersteller und/oder ggf. durch Werkzeugmaschinenzubehöranbieter.

Des Weiteren umfasst der Web-Server 110 beispielhaft eine Netzwerkschnittstelle 113 zur Herstellung einer kommunikativen Verbindung mit dem Netzwerk 200. Der Web-Server 110 ist beispielhaft dazu eingerichtet, web-basierte Daten bzw. web-basierte Anwendungen über das Netzwerk 100 bereitzustellen und bei Anfrage z.B. durch eine oder mehrere der Bedieneinrichtungen 230 bzw. 260 auszuführen und entsprechende Daten über die Netzwerke 100 und 200 an die anfragende Bedieneinrichtung 230 bzw. 260 zu übermitteln.

Fig. 5 zeigt eine schematische, beispielhaft Darstellung eines Datenbank-Servers 210 gemäß einem Ausführungsbeispiel der vorliegenden Erfindung.

Beispielhaft umfasst der Datenbank-Server 210 eine Datenverarbeitungseinrichtung 211 (z.B. mit einem oder mehreren Prozessoren 211a) und eine Datenspeichereinrichtung 212 zum Speichern von durch die Datenverarbeitungseinrichtung 211 ausführbaren Programmen und weiteren Daten bzw. insbesondere Daten einer oder mehrerer Datenbanken (siehe spätere Beschreibung).

Des Weiteren umfasst der Datenbank-Server 210 beispielhaft eine Dateneingabeschnittstelle 214 mittels der Daten an der Datenspeichereinrichtung 212 durch einen oder mehrere Anbieter bereitgestellt werden können. Daten für die Datenbank(en) der Datenspeichereinrichtung 212 können hierbei auch über das Netzwerk 200 von einer der Bedieneinrichtungen 230 bzw. 260 bzw. von dem CAD-CAM-System-Server 220 bereitgestellt werden.

Des Weiteren umfasst der Datenbank-Server 210 beispielhaft eine Netzwerkschnittstelle 213 zur Herstellung einer kommunikativen Verbindung mit dem Netzwerk 200. Der Datenbank-Server 210 ist beispielhaft dazu eingerichtet, Daten der Datenbank(en) der Datenspeichereinrichtung 212 über das Netzwerk 200 bereitzustellen bzw. entsprechende Daten über das Netzwerk 200 an eine anfragende Bedieneinrichtung 230 bzw. 260 zu übermitteln.

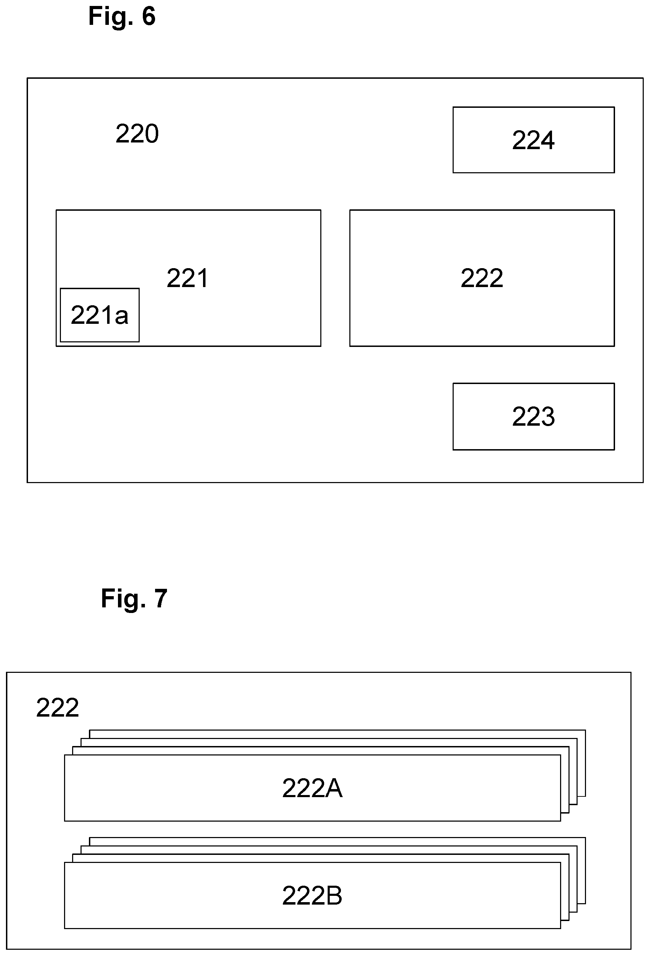

Fig. 6 zeigt eine schematische, beispielhaft Darstellung eines CAD/CAM-System-Servers 220 gemäß einem Ausführungsbeispiel der vorliegenden Erfindung.

Beispielhaft umfasst der CAD/CAM-System-Server 220 eine Datenverarbeitungseinrichtung 221 (z.B. mit einem oder mehreren Prozessoren 221a) und eine Datenspeichereinrichtung 222 zum Speichern von durch die Datenverarbeitungseinrichtung 221 ausführbaren Programmen und weiteren Daten bzw. insbesondere CAD/CAM-Daten wie z.B. CAD-Daten von einem oder mehreren Werkstücken (und ggf. auch Werkzeugen) und mittels eines CAD/CAM-Systems erzeugte NC-Codes bzw. NC-Programme (siehe spätere Beschreibung).

Des Weiteren umfasst der CAD/CAM-System-Server 220 beispielhaft eine Dateneingabeschnittstelle 224 mittels der CAD/CAM-Daten an der Datenspeichereinrichtung 222 durch einen oder mehrere CAD/CAM-Computer bzw. Computersysteme bereitgestellt werden können. CAD/CAM-Daten für die Datenspeichereinrichtung 222 können hierbei auch über das Netzwerk 200 von einer der Bedieneinrichtungen 230 bzw. 260 bereitgestellt werden, insofern diese mit CAD/CAM-Software ausgestattet sind.

Beispielhaft kann die Bedieneinrichtung 260 als Computer ausgebildet sein, der sowohl eine Bedieneinrichtungssoftware analog zu der Bedieneinrichtungssoftware der Bedieneinrichtungen 230 umfasst als auch optional ein oder mehrere CAD/CAM-Softwareanwendungen.

Des Weiteren umfasst der CAD/CAM-System-Server 220 beispielhaft eine Netzwerkschnittstelle 223 zur Herstellung einer kommunikativen Verbindung mit dem Netzwerk 200. Der CAD/CAM-System-Server 220 ist beispielhaft dazu eingerichtet, CAD/CAM-Daten Daten der Datenspeichereinrichtung 222 über das Netzwerk 200 bereitzustellen bzw. entsprechende Daten über das Netzwerk 200 an eine anfragende Bedieneinrichtung 230 bzw. 260 zu übermitteln.

Fig. 7 zeigt eine schematische beispielhafte Darstellung der Datenspeichereinrichtung 222 des CAD/CAM-System-Servers 220.

Die Datenspeichereinrichtung 222 des CAD/CAM-System-Servers 220 speichert beispielhaft eine Mehrzahl von CAD-Dateien 222A, wobei jede CAD-Datei 222A ein CAD-Modell eines Werkstücks, eines Werkstückteils, oder eines Werkzeugs angibt.

Die Datenspeichereinrichtung 222 des CAD/CAM-System-Servers 220 speichert beispielhaft weiterhin eine Mehrzahl von NC-Dateien 222B, wobei jede NC-Datei 22B ein NC-Programm bzw. einen NC-Code oder NC-Programm- bzw. NC-Codeabschnitte angibt, z.B. zur Bearbeitung eines Werkstücks an einer Werkzeugmaschine.

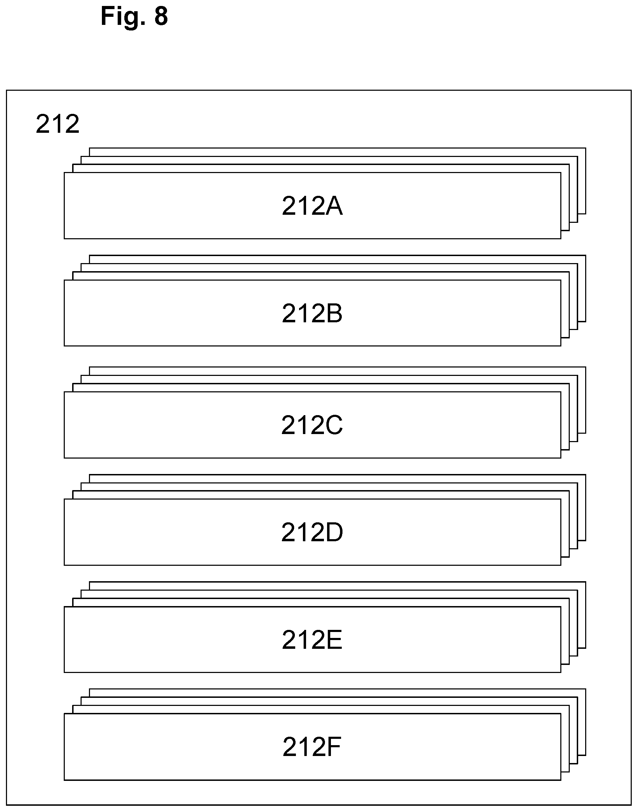

Fig. 8 zeigt eine schematische beispielhafte Darstellung der Datenspeichereinrichtung 212 des Datenbank-Servers 210.

Die Datenspeichereinrichtung 212 des Datenbank-Servers 210 speichert beispielhaft eine Mehrzahl von Auftrags-Dateien 212A, wobei jede Auftrags-Datei 212A einem Werkstückbearbeitungsauftrag zur Bearbeitung eines oder mehrerer Werkstücke an einer Werkzeugmaschine zugeordnet ist.

Die dem entsprechenden Werkstückbearbeitungsauftrag zugeordneten Auftragsdaten einer Auftrags-Datei 212A (z.B. Auftragsdatenbank) können z.B. eine oder mehrere der folgenden Kopfdaten angeben: eine Bezeichnung des Arbeitsgangs, eine Auftrags-Identifikationsnummer, eine Auftragsbeschreibung, eine Werkstück-Identifikationsnummer, eine Werkstückbeschreibung, eine dem Auftrag zugeordnete Bestellungs-Identifikationsnummer, eine zugeordnete Kunden-Identifikationsnummer, eine Arbeitsplan-Identifikationsnummer, eine Angabe der gewünschten bzw. zu erzielenden Stückzahl (d.h. z.B. eine Anzahl der zu fertigenden Menge z.B. bei analoger Bearbeitung mehrerer Werkstücke hintereinander im gleichen Werkstückbearbeitungsauftrag), eine geplante Startzeit, eine geplante Endzeit, eine geplante bzw. errechnete Bearbeitungsdauer und ggf. optionale Informationen eines freien Textfelds. Derartige Daten können auch aus einem ERP- bzw. MES-System bereitgestellt werden.

Die Datenspeichereinrichtung 212 des Datenbank-Servers 210 speichert optional beispielhaft eine Mehrzahl von Werkzeug-Dateien 212B (z.B. Werkzeugdatenbank), wobei jede Werkzeug-Datei 212B Informationen zu einem zugeordneten Werkzeug bereitstellt bzw. angibt, wie z.B. eines oder mehrere aus: Werkzeugdimensionen (Größe, Durchmesser, Länge, Schneidentyp, Schneidenzahl etc.), Werkzeugtyp, Werkzeugidentifikationsnummer, usw.

Die Datenspeichereinrichtung 212 des Datenbank-Servers 210 speichert beispielhaft eine Mehrzahl von Werkzeuglisten-Dateien 212C (z.B. Werkzeuglistendatenbank), wobei jede Werkzeuglisten-Datei 212C eine Werkzeugliste angibt. Bevorzugt ist jede Werkzeuglisten-Datei 212C einem Auftrag einer der Auftrags-Dateien 212A zugeordnet und gibt bevorzugt diejenigen Werkzeuge an, die an der den Auftrag ausführenden Werkzeugmaschine bei auftragsgemäßer Werkstückbearbeitung bereitzustellen sind bzw. erforderlich sind (erforderliche Werkzeugbeladung an der ausführenden Werkzeugmaschine).

Die Datenspeichereinrichtung 212 des Datenbank-Servers 210 speichert optional beispielhaft eine Mehrzahl von Spannmittel-Dateien 212D (z.B. Spannmitteldatenbank), wobei jede Spannmittel-Datei 212D Informationen zu einem zugeordneten Spannmittel (z.B. Werkstück- oder Werkzeugspannmittel) bereitstellt bzw. angibt, wie z.B. eines oder mehrere aus: Spannmitteldimensionen, Spannmitteltyp, Spannmittelidentifikationsnummer, usw.

Die Datenspeichereinrichtung 212 des Datenbank-Servers 210 speichert beispielhaft eine Mehrzahl von Spannmittellisten-Dateien 212E (z.B. Spannmittellistendatenbank), wobei jede Spannmittellisten-Datei 212E eine Spannmittelliste angibt. Bevorzugt ist jede Spannmittellisten-Datei 212E einem Auftrag einer der Auftrags-Dateien 212A zugeordnet und gibt bevorzugt diejenigen Spannmittel an, die an der den Auftrag ausführenden Werkzeugmaschine bei auftragsgemäßer Werkstückbearbeitung bereitzustellen sind bzw. erforderlich sind (erforderliche Spannmittelrüstung an der ausführenden Werkzeugmaschine).

Die Datenspeichereinrichtung 212 des Datenbank-Servers 210 speichert (optional) beispielhaft eine Mehrzahl von optional ladbaren Bearbeitungssequenzvorlagen-Dateien 212F (z.B. Bearbeitungssequenzvorlagen-Datenbank), wobei jede Bearbeitungssequenzvorlagen-Datei 212F eine Vorlage einer vorgegebenen Bearbeitungsschrittsequenz angibt. Dies ist bevorzugt auftragsunabhängig und umfasst bevorzugt pro Bearbeitungssequenzvorlagen-Datei 212F eine Angabe von einer Mehrzahl von hintereinander an einer Werkzeugmaschine ausführbaren Bearbeitungsschritten und bevorzugt weiterhin eine vorgegebene Reihenfolge der an der Werkzeugmaschine ausführbaren Bearbeitungsschritte der vorgegebenen Bearbeitungsschrittsequenz.

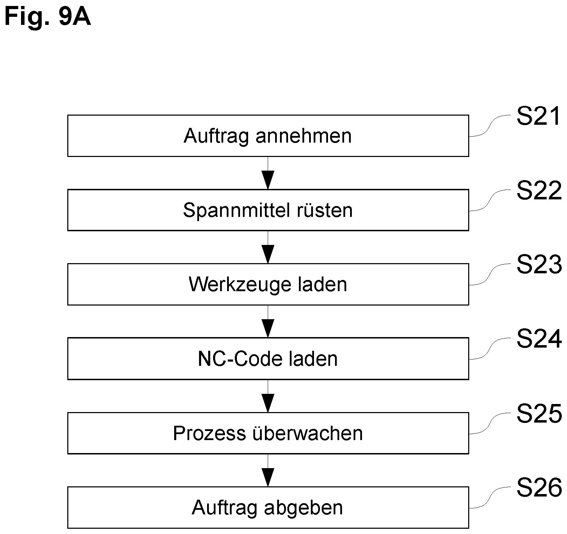

Figs. 9A bis 9C zeigen schematisch beispielhafte Bearbeitungsschrittsequenzen gemäß Ausführungsbeispielen. Derartige Bearbeitungsschrittsequenzen können z.B. durch entsprechende Bearbeitungssequenzvorlagen-Dateien 212F vorgegeben werden oder in einer Editor-Anwendung (siehe spätere Beschreibung) durch einen Bediener an einer Bedieneinrichtung 230 bzw. 260 definiert bzw. erstellt werden. Weiterhin können Bediener an einer Bedieneinrichtung 230 bzw. 260 an der Datenspeichereinrichtung 212 gespeicherte Bearbeitungssequenzvorlagen-Dateien 212F zu der jeweiligen Bedieneinrichtung 230 bzw. 260 laden bzw. herunterladen.

Fig. 9A zeigt eine beispielhafte vorgegebene Bearbeitungsschrittsequenz mit den Schritten:
- S21: "Auftrag annehmen", in dem z.B. einer der Werkstückbearbeitungsaufträge der Auftrags-Dateien 212A an der entsprechenden Werkzeugmaschine (z.B. in einem eine Mehrzahl von Werkzeugmaschinen umfassenden Fertigungssystem) durch den Bediener an der entsprechenden Bedieneinrichtung 230 angenommen wird (und die Annahme ggf. einem überwachenden Produktionssystem automatisch z.B. über das Netzwerk 200 gemeldet werden kann).
- S22: "Spannmittel einrüsten", in dem auftragsgemäß z.B. auf Basis einer dem auszuführenden Auftrag zugeordneten Spannmittellisten-Datei 212E die erforderlichen Spannmittel an der Werkzeugmaschine zu rüsten sind und/oder die Spannmittelrüstung entsprechend der dem auszuführenden Auftrag zugeordneten Spannmittellisten-Datei 212E an der Werkzeugmaschine automatisch überprüft wird.
- S23: "Werkzeuge laden", in dem auftragsgemäß z.B. auf Basis einer dem auszuführenden Auftrag zugeordneten Werkzeuglisten-Datei 212C die erforderlichen Werkzeuge an der Werkzeugmaschine zu laden sind und/oder die Werkzeugbeladung entsprechend der dem auszuführenden Auftrag zugeordneten Werkzeuglisten-Datei 212C an der Werkzeugmaschine automatisch überprüft wird.
- S24: "NC-Code laden", in dem auftragsgemäß ein oder mehrere der entsprechenden Werkstückbearbeitung zugrundeliegende NC-Codes bzw. NC-Programme an der Steuereinrichtung der Werkzeugmaschine zu laden sind, z.B. durch Beziehen von dem CAD/CAM-System-Server 212.
- S25: "Prozess überwachen", in dem die Werkstückbearbeitung eines oder mehrerer Werkstücke durchgeführt wird und optional entsprechend Angaben der Auftragsangaben einer zugeordneten Auftragsdatei 212A ein oder mehrere Prozessparameter entsprechend potentieller auftragsgemäßer Vorgaben überwacht werden (z.B. durch automatische Anpassung von Prozessparametergrenzwerten).
- S26: "Auftrag abgeben", in dem der ausgeführte Auftrag abgegeben wird bzw. als ausgeführt bestätigt wird (und die Abgabe bzw. Fertigstellung ggf. einem überwachenden Produktionssystem automatisch z.B. über das Netzwerk 200 gemeldet werden kann).

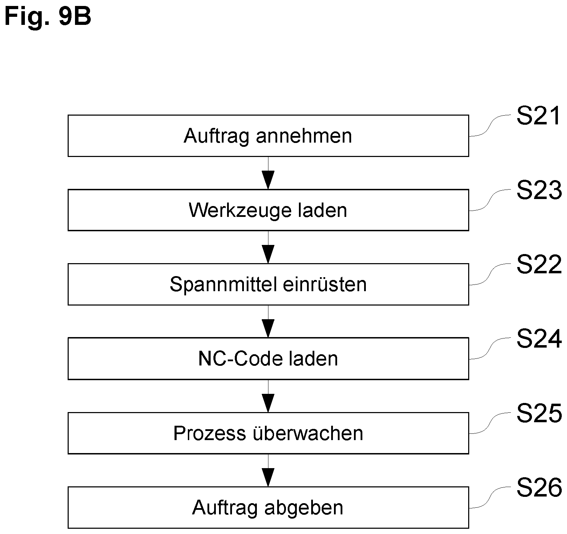

Fig. 9B zeigt eine beispielhafte vorgegebene weitere Bearbeitungsschrittsequenz analog zu Fig. 9A, wobei beispielhaft die gleichen Bearbeitungsschritte durchgeführt werden, jedoch mit einer anderen Bearbeitungsschrittreihenfolge, z.B. mit der Werkzeugbeladung vor der Spannmittelrüstung an der Werkzeugmaschine.

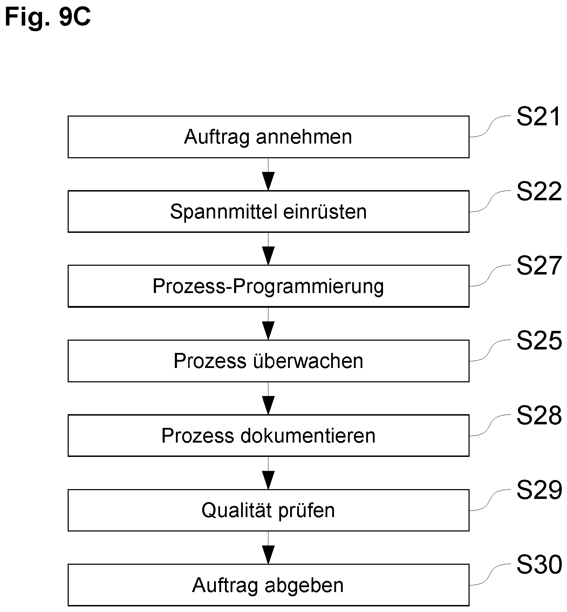

Fig. 9C zeigt eine beispielhafte vorgegebene weitere Bearbeitungsschrittsequenz, wobei beispielhaft statt dem Laden des NC-Codes (S24) eine manuelle NC-Prozessprogrammierung an der Bedieneinrichtung der Werkzeugmaschine durch den Bediener vorgegeben ist, z.B. durch manuelle Programmierung oder durch Maschinenzyklenunterstützte semi-automatische NC-Programmierung durch den Bediener.

Weiterhin umfasst die beispielhafte vorgegebene weitere Bearbeitungsschrittsequenz gemäß Fig. 9C die Schritte:
- S28: "Prozess dokumentieren", in dem der Bediener an der Werkzeugmaschine den Prozess nach erfolgter Werkstückbearbeitung an der Bedieneinrichtung über die graphische Benutzeroberfläche dokumentiert.
- S29: "Qualität prüfen", in dem das bzw. die fertiggestellten Werkstücke auf Qualität der Bearbeitung überprüft werden, z.B. durch automatische Oberflächenvermessung an der Werkzeugmaschine und/oder computerunterstützte Analyse der während der Bearbeitung aufgenommenen Prozessparameter.

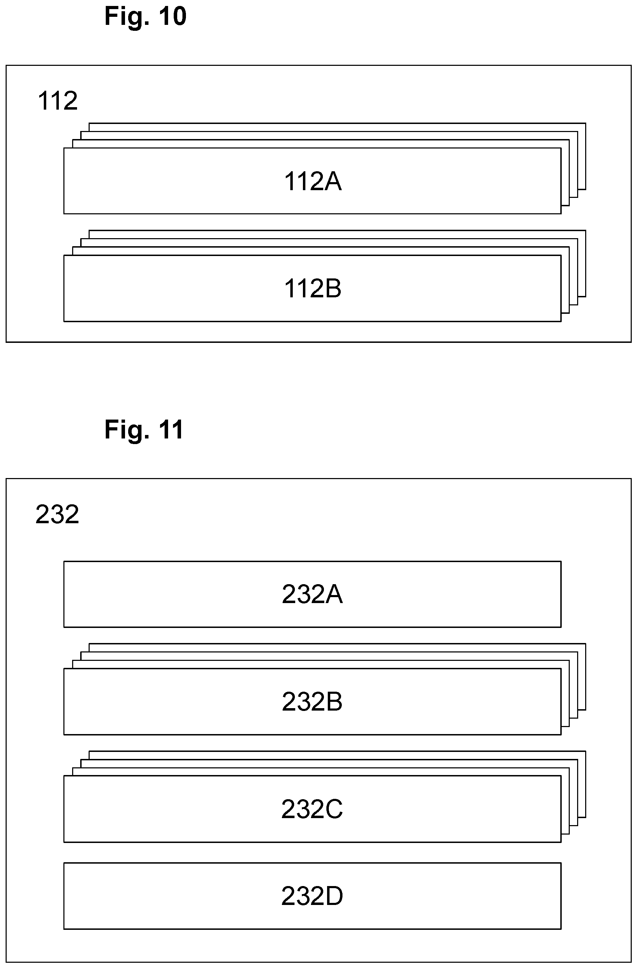

Fig. 10 zeigt eine schematische beispielhafte Darstellung der Datenspeichereinrichtung 112 des Web-Servers 110.

Die Datenspeichereinrichtung 112 des Web-Servers 110 speichert beispielhaft eine Mehrzahl von web-basierten Bearbeitungsschrittanwendungen 112A, wobei jede Bearbeitungsschrittanwendung einem Bearbeitungsschritt einer Mehrzahl von Bearbeitungsschritten zugeordnet ist und eine die Ausführung des zugeordneten Bearbeitungsschritt unterstützende graphische Benutzeroberfläche an einer anfragenden Bedieneinrichtung 230 bereitstellt. Derartige web-basierte Bearbeitungsschrittanwendungen 112A können in bevorzugten Ausführungsbeispielen als entsprechende web-basierte Applets, entsprechende Plugins (z.B. Browser-Plugins) und besonders bevorzugt durch entsprechende Widget-Anwendungen bzw. Widgets ausgebildet sein.

Die Datenspeichereinrichtung 112 des Web-Servers 110 speichert (optional) beispielhaft eine Mehrzahl von optional ladbaren Bearbeitungssequenzvorlagen-Dateien 112B (z.B. Bearbeitungssequenzvorlagen-Datenbank), wobei jede Bearbeitungssequenzvorlagen-Datei 112B eine Vorlage einer vorgegebenen Bearbeitungsschrittsequenz angibt. Dies ist bevorzugt auftragsunabhängig und umfasst bevorzugt pro Bearbeitungssequenzvorlagen-Datei 112F eine Angabe von einer Mehrzahl von hintereinander an einer Werkzeugmaschine ausführbaren Bearbeitungsschritten und bevorzugt weiterhin eine vorgegebene Reihenfolge der an der Werkzeugmaschine ausführbaren Bearbeitungsschritte der vorgegebenen Bearbeitungsschrittsequenz.

Dies kann analog zu der Bearbeitungssequenzvorlagen-Datenbank auf dem Datenbank-Server 210 bereitgestellt werden und es können auch Bearbeitungssequenzvorlagen von dem Web-Server 110 an den Datenbank-Server 210 übermittelt werden, ggf. automatisch oder auf Anfrage einer Bedieneinrichtung 230 bzw. 260.

Neben Bearbeitungsschrittanwendungen und Bearbeitungsschrittsequenzvorlagen für Aufträge zur Werkstückbearbeitung können auch weitere Bearbeitungsschrittanwendungen und Bearbeitungsschrittsequenzvorlagen bereitgestellt werden, wie z.B. Bearbeitungsschrittanwendungen und Bearbeitungsschritt-sequenzvorlagen für weitere automatisierte Funktionen bzw. Arbeitsgänge an der Werkzeugmaschine, wie z.B.:
- das automatische Zusammenstellen von Werkstückpaletten,
- das automatisierte Beladen von Werkstückpaletten,
- das automatische Umsortieren von Werkstücken auf Werkstückpaletten,
- das Einstellen einer Spannlage eines Werkstücks,
- das Wechseln von einer Spannlage auf eine andere Spannlage,
- das automatische Vermessen von Werkstücken (z.B. vor, während und/oder nach der Bearbeitung, z.B. mittels Messtastern, Laservermessungsvorrichtungen, etc.),
- das automatische Beladen des Werkzeugmagazins,
- das automatisierte Einrichten von Werkzeugen an der Werkzeugmaschine,
- das automatische Umsortieren von Werkzeugen am Werkzeugmagazin,
- das automatische Beladen von Werkzeugen an Werkzeugmaschinen bzw. Werkzeugmagazinen z.B. für eine nächste Schicht, und/oder
- ein oder mehrere automatische Wartungs- und Instandhaltungsanwendungen bzw. Serviceanwendungen an Werkzeugmaschinen, wie z.B. Filterwechsel oder Filterreinigungen, oder andere automatisierte Maschinenreinigungsvorgänge bzw. Reinigungstätigkeiten.

Fig. 11 zeigt eine schematische beispielhafte Darstellung der Datenspeichereinrichtung 232 einer Bedieneinrichtung 230 gemäß einem Ausführungsbeispiel der vorliegenden Erfindung.

Die Datenspeichereinrichtung 232 der Bedieneinrichtung 230 speichert beispielhaft eine (oder mehrere) GUI-Anwendung(en) 232A zum Ausführen der graphischen Benutzeroberfläche.

Die Datenspeichereinrichtung 232 der Bedieneinrichtung 230 speichert beispielhaft eine Mehrzahl von Steuerungsfunktionsanwendungen 232B zum Ausführen von Steuerungsfunktionen an der Werkzeugmaschine bzw. zur Steuerung von Steuerungsfunktionen der NC-Steuerungseinrichtung 240 und/oder der PLC der Werkzeugmaschine.

Die Datenspeichereinrichtung 232 der Bedieneinrichtung 230 speichert beispielhaft eine Mehrzahl von Prozessüberwachungsanwendungen 232C zum Überwachen von Prozessparametern bzw. Sensorsignalen an der Werkzeugmaschine, z.B. auf Basis von Daten und/oder Sensorsignalen, die von der NC, der PLC oder direkt über die Schnittstelle 237 von Sensoren der Werkzeugmaschine empfangen werden.

Die Datenspeichereinrichtung 232 der Bedieneinrichtung 230 speichert beispielhaft eine Editor-Anwendung 232D zum Ausführen eines Bearbeitungsschrittsequenz-Editors an der graphischen Benutzeroberfläche der Benutzerschnittstelle 233 der Bedieneinrichtung 230 der Werkzeugmaschine 250. Die Editor-Anwendung 232D ist beispielhaft dazu eingerichtet, dass ein Bediener auf Grundlage der von dem Web-Server 110 bereitgestellten Bearbeitungsschrittanwendungen 112A neue vorgegebenen Bearbeitungsschritt-sequenzen zusammenstellen kann bzw. bereits an dem Web-Server 110 oder dem Datenbank-Server 210 bereitgestellte Bearbeitungsschrittsequenzvorlagen modifizieren kann. Diese Editor-Funktionalität kann bevorzugt nur Bedienern mit einer speziellen Autorisation zur Verfügung gestellt werden.

Die Bedieneinrichtung 260 kann analog zur Bedieneinrichtung 230 ausgebildet sein, wobei ggf. die Prozessüberwachungsanwendungen 232C (remote) über das Netzwerk eine Werkzeugmaschine fernüberwachen und wobei beispielhaft optional eine oder mehrere der Steuerungsfunktionsanwendungen 232B nicht bereitgestellt werden oder aus Sicherheitsgründen ggf. nur in eingeschränktem Umfang zur Verfügung stehen.

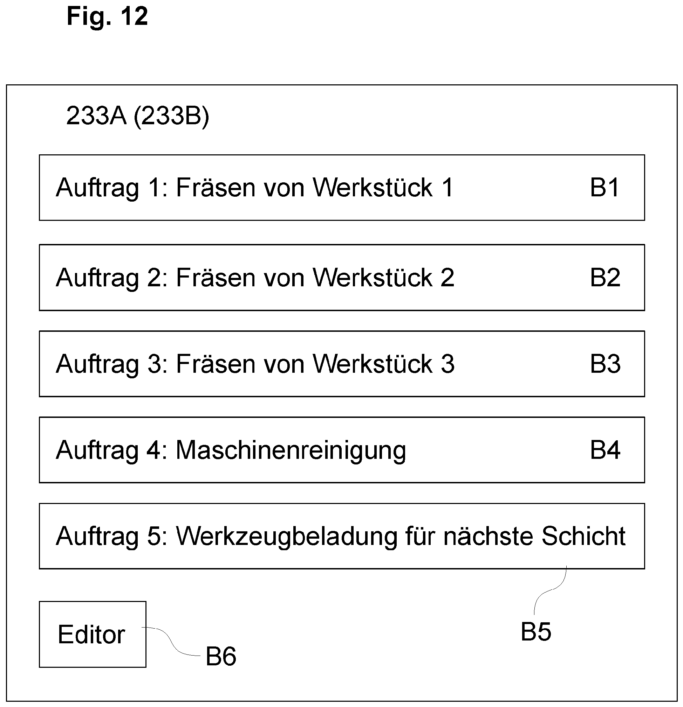

Die Anwendung 232A der graphischen Benutzeroberfläche der Benutzerschnittstelle (z.B. auf Basis der Auftragsdaten 212A an dem Datenbank-Server 210 und/oder auf Grundlage von an der Datenspeichereinrichtung 232 der Bedieneinrichtung 230 der Werkzeugmaschine 250 gespeicherten Auftragsdaten 212A) dazu eingerichtet, eine durch den Bediener anwählbare Liste von auszuführenden Aufträgen anzuzeigen, z.B. auf einem der Bildschirmbereiche 233A oder 233B; siehe z.B. Fig. 12.

Zurückkommend auf Fig. 2 in Verbindung mit Fig. 11 wird nun die Funktionalität gemäß Ausführungsbeispielen an der Bedieneinrichtung 230 der Werkzeugmaschine 250 beschrieben.

Fig. 12 zeigt beispielhaft schematisch einen Auftragsauswahlbildschirm der graphischen Benutzeroberfläche der Benutzerschnittstelle 233 der Bedieneinrichtung 230 der Werkzeugmaschine 250.

Beispielhaft sind die Auftragsauswahlelemente B1 bis B5 bereitgestellt, über die der Bediener die Aufträge 1 bis 5 auswählen kann. Bevorzugt kann die Anwahl der entsprechenden Aufträge an der Bedieneinrichtung 230 auftragsgemäß nur von Bedienern ausgewählt werden, die eine ausreichende Autorisation vorweisen. Dies kann z.B. durch unterschiedliche User-Rollen auf Grundlage der Befähigung bzw. Ausbildung des Bedieners erfolgen, z.B. mittels der User-Rollen: einfacher Maschinenbediener, erfahrener Maschinenbediener, Maschinenbelader, Einrichter, Maschinenprogrammierer, Maschineninstandhalter, Mehrmaschinenbediener, Werkzeugvoreinsteller, Arbeitsvorbereiter, Fabrikplaner, Prozessstandardisierer, etc.

Das Auswahlelement B6 ermöglicht beispielhaft das Starten der Editor-Anwendung 232D zum Ausführen des Bearbeitungsschrittsequenz-Editors an der graphischen Benutzeroberfläche der Benutzerschnittstelle 233 der Bedieneinrichtung 230 der Werkzeugmaschine 250. Die Editor-Anwendung ist dazu eingerichtet, die am Web-Server bereitgestellten Bearbeitungsschrittanwendungen aufzulisten und auf Anwahl des Bedieners zu importieren. Der Bediener kann zudem die Reihenfolge der importierten Bearbeitungsschrittanwendungen festlegen bzw. definieren und vorgegebene Bearbeitungsschrittsequenzen speichern. Diese Editor-Funktionalität kann bevorzugt nur Bedienern mit einer speziellen Autorisation zur Verfügung gestellt werden.

Bevorzugt gibt der Editor für jede Bearbeitungsschrittanwendung an, welche Eingangsdaten bzw. Eingangsinformationen benötigt werden, welche Ausgangsdaten bzw. Ausgangsinformationen bereitgestellt werden und/oder welche Steuerfunktionen der Werkzeugmaschine aufgerufen werden.

In bevorzugten Ausführungsbeispielen kann bei Speichern einer editierten Bearbeitungsschrittsequenz eine automatische Plausibilitätsprüfung durchgeführt werden, bei der für jede Bearbeitungsschrittanwendung automatisiert überprüft wird, ob die erforderlichen Eingangsdaten zur Verfügung stehen (Datenverfügbarkeitsprüfung), entweder durch manuelle Eingabe am Editor, durch Bereitstellung als Ausgangsdaten einer in der vorgegebenen Sequenz vorhergehenden Bearbeitungsschrittanwendung, aus der Speichereinrichtung der Bedieneinrichtung, der Steuereinrichtung, aus PLC-Registern, oder durch Zugriff auf Datenbankdaten auf dem Datenbank-Server 210 und/oder den CAD-CAM-System-Server 220.

Insbesondere wird die Datenverfügbarkeit bevorzugt nicht nur bei Speichern einer editierten bzw. erstellten Bearbeitungsschrittsequenz geprüft werden, sondern auch bei Verknüpfung eines neuen Auftrags mit einer Bearbeitungsschrittsequenz bzw. bei Start einer mit einem Auftrag verknüpften Bearbeitungsschrittsequenz bzw. optional bei auch noch bei (bzw. jeweils vor) Ausführen der entsprechenden Bearbeitungsschrittanwendungen.

Bei Ausführen einer vorgegebenen Bearbeitungsschrittsequenz durch den Bediener an der Bedieneinrichtung 230 ist nur jede Bearbeitungsschrittanwendung in der durch die gespeicherte oder importierte Bearbeitungsschrittsequenz vorgegebenen Reihenfolge aufgerufen und ausgeführt werden, und insbesondere kann keine Bearbeitungsschrittanwendung übersprungen werden.

Das Ausführen einer einem Auftrag zugeordneten vorgegebenen Bearbeitungsschrittsequenz durch den Bediener an der Bedieneinrichtung 230 wird durch den Bediener durch Anwahl eines der Auftragsauswahlelemente B1 bis B5, die einem jeweiligen Bearbeitungsauftrag zugeordnet sind, ausgelöst, zumindest insofern seine Autorisation dies erlaubt.

Bei Start einer jeweiligen Bearbeitungsschrittanwendung durch den Bediener kann ein neues Fenster der entsprechenden Bearbeitungsschrittanwendung geöffnet werden und eine Validitätsprüfung durchgeführt werden (z.B. inkl. Datenverfügbarkeitsprüfung). Zudem können der jeweiligen Bearbeitungsschrittanwendung zugeordnete Maschinenfunktionen ausgeführt werden.

Weiterhin kann in bevorzugten Ausführungsbeispielen an dem anderen Bildschirmbereich, der einen Control-Screen der Steuerungseinrichtung 240 zeigt, automatisch eine dem jeweiligen Bearbeitungsschritt zugeordnete Bildschirmdarstellung bzw. ein dem jeweiligen Bearbeitungsschritt zugeordnetes Steuerungsmenü aufgerufen werden. Dies kann von der Datenverarbeitungseinrichtung 231 der Bedieneinrichtung 230 über die NC-Schnittstelle 235 an der Steuerungseinrichtung 240 angefragt bzw. automatisch eingestellt werden.

Eine erste Bearbeitungsschrittanwendung (z.B. "Auftrag annehmen") kann dem Bediener die Auftragskopfdaten angeben, z.B. auf Basis der Auftragsdaten der dem auszuführenden Auftrag zugeordneten Auftragsdatei 212A durch Import von dem Datenbank-Server 210.

Durch Bestätigung des Bearbeitungsschrittanwendung (z.B. "Auftrag annehmen") kann der Auftrag in den Status "Ausführung" gesetzt werden. Dies kann auch automatisch über das Netzwerk 200 an ein Produktionsüberwachungssystem gemeldet werden.

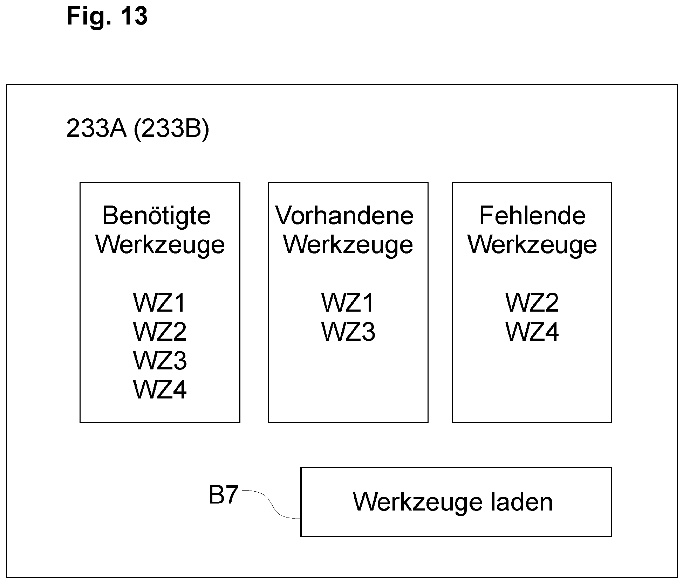

Eine weitere (optionale) Bearbeitungsschrittanwendung kann das Beladen von Werkzeugen bzw. die Überprüfung des Werkzeugbedarfs betreffen, siehe Fig. 13.

Fig. 13 zeigt beispielhaft schematisch einen Werkzeugprüfbildschirm der graphischen Benutzeroberfläche der Benutzerschnittstelle 233 der Bedieneinrichtung 230 der Werkzeugmaschine 250.

Hierbei sind (z.B. auf Basis einer dem auszuführenden Auftrag zugeordneten Werkzeuglisten-Datei 212C) die benötigten Werkzeuge angegeben. Zudem können auf Basis der an der Bedieneinrichtung vorliegenden Daten die an der Werkzeugmaschine vorhanden Werkzeuge angezeigt werden und die demnach noch fehlenden bzw. noch zu ladenden Werkzeuge.

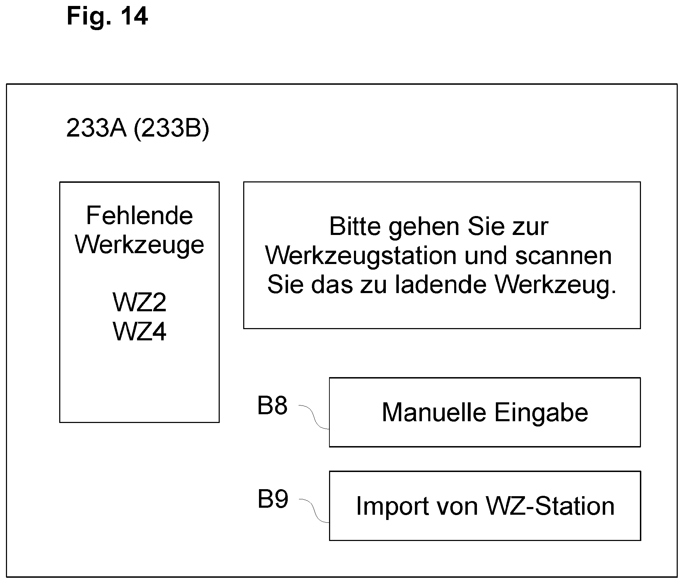

Durch Betätigung des Auswahlelements B7 "Werkzeuge laden" kann der Bediener zur Werkzeugbeladung übergehen, um ggf. die fehlenden Werkzeuge zu laden bzw. die dazugehörenden Werkzeugdaten eingeben (oder diese entweder aus den Werkzeugdaten 212B importieren, falls bereits zuvor gescannt, oder von einem an dem Netzwerk 200 verbundenen Werkzeugvoreinstellgerät nach dem Scannen des Werkzeugs importieren), siehe z.B. Fig. 14.

Fig. 14 zeigt beispielhaft schematisch einen Werkzeugladebildschirm der graphischen Benutzeroberfläche der Benutzerschnittstelle 233 der Bedieneinrichtung 230 der Werkzeugmaschine 250.

Durch Betätigung des Auswahlelements B8 "Manuelle Eingabe" kann der Bediener die fehlenden Werkzeuge vor dem Laden an der Werkzeugstation scannen und dann die Daten manuell eingeben oder diese durch Betätigen des Auswahlelements B9 "Import von WZ-Station" von einem an dem Netzwerk 200 verbundenen Werkzeugvoreinstellgerät importieren.

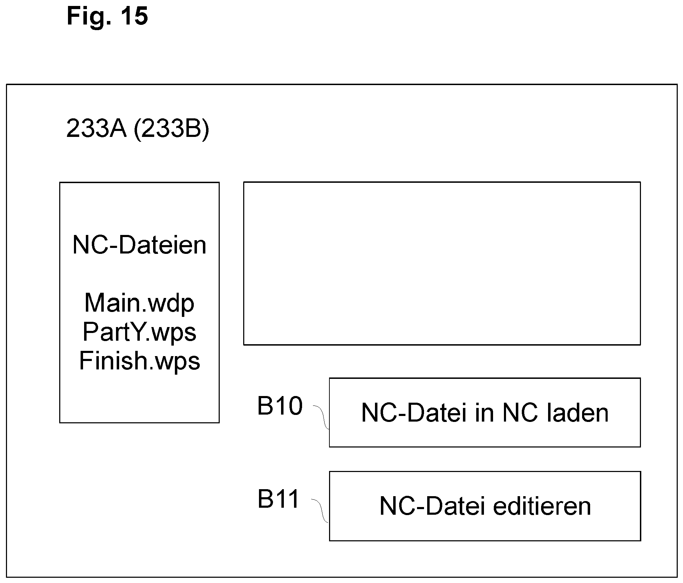

Eine weitere (optionale) Bearbeitungsschrittanwendung kann das Laden bzw. Programmieren des NC-Codes betreffen, siehe Fig. 15.

Fig. 15 zeigt beispielhaft schematisch einen NC-Code-Ladebildschirm der graphischen Benutzeroberfläche der Benutzerschnittstelle 233 der Bedieneinrichtung 230 der Werkzeugmaschine 250.

Beispielhaft sind dem Auftrag zugeordnete NC-Dateien angegeben (z.B. auf Basis der Auftragsdaten der zugeordneten Auftragsdatei 212A) und diese können durch Betätigung des Auswahlelements B10 "NC-Datei in NC laden" an die Steuerungseinrichtung 240 exportiert werden (ggf. nach importieren der entsprechenden Datei(en) vom CAD/CAM-System-Server 220). Durch Auswahl des Auswahlelements B10 "NC-Datei editieren" kann der Bediener eine geladene Datei im beispielhaft darüber liegenden Anzeigefenster editieren (oder neu erstellen), zumindest falls die erforderliche Autorisation des Bedieners vorliegt.

Nach Werkzeugbeladung, ggf. Spannmitterüstung und NC-Code-Bereitstellung in Reihenfolge und Art gemäß der vorgegebenen Bearbeitungsschrittsequenz (und ggf. nach weiteren vorgegebenen Schritten), kann die Werkstückbearbeitung durchgeführt werden, ggf. in Verbindung mit vorgegebener Prozessüberwachung, darauffolgender Prozessdokumentation und ggf. optionaler Qualitätsprüfung, bis in einem letzten Bearbeitungsschritt der Auftrag durch den Bediener als Beendet bzw. Ausgeführt bestätigen kann.

Gemäß einem oder mehreren der vorstehenden Ausführungsbeispiele kann die Bedienung bzw. Steuerung einer Werkzeugmaschine erweitert und verbessert werden, insbesondere hinsichtlich der Bedienbarkeit bzw. der Automatisierung bzw. semi-automatisierten Unterstützung von Bearbeitungsschritten eines Werkstückbearbeitungsauftrags, ggf. auch durch teilweise ungeschulte bzw. wenig erfahrene Bediener.

Vorstehend wurden Beispiele bzw. Ausführungsbeispiele der vorliegenden Erfindung sowie deren Vorteile detailliert unter Bezugnahme auf die beigefügten Figuren beschrieben. Es sei erneut hervorgehoben, dass die vorliegende Erfindung jedoch in keinster Weise auf die vorstehend beschriebenen Ausführungsbeispiele und deren Ausführungsmerkmale begrenzt bzw. eingeschränkt ist.

## Patentansprüche

1. Bedienvorrichtung (230) zum Einsatz an einer numerisch gesteuerten Werkzeugmaschine, mit:
einer Datenverarbeitungseinrichtung (231), die insbesondere dazu eingerichtet ist, Steuer- und Bedienanwendungen auszuführen,
einer Steuerungsschnittstelle (235), über die die Datenverarbeitungseinrichtung (231) mit einer Steuereinrichtung der Werkzeugmaschine kommunikativ verbindbar ist, und
einer Benutzerschnittstelle (233), die dazu eingerichtet ist, Eingabeinformationen gemäß Bedieneingaben eines Bedieners der Werkzeugmaschine anzunehmen und an die Datenverarbeitungseinrichtung (231) zu übermitteln und/oder von der Datenverarbeitungseinrichtung (231) übermittelte Ausgabeinformationen an den Bediener auszugeben,
wobei die Datenverarbeitungseinrichtung (231) dazu eingerichtet ist, einen Bearbeitungsauftrag zur Bearbeitung eines oder mehrerer Werkstücke an der Werkzeugmaschine auf Grundlage einer von dem Bediener über die Benutzerschnittstelle (233) anwählbaren Bearbeitungsschrittsequenz zu steuern und entsprechende Maschinen- bzw. Steuerfunktionen über die Steuerungsschnittstelle an der Steuereinrichtung aufzurufen,
die Datenverarbeitungseinrichtung (231) dazu eingerichtet ist, den Bearbeitungsauftrag auf Grundlage von in einer Datenspeichervorrichtung der Bedieneinrichtung gespeicherten Bearbeitungsschrittsequenzdaten die der Bearbeitungsschrittsequenz zugeordnet sind, zu steuern, wobei
die Bearbeitungsschrittsequenzdaten eine Mehrzahl von Bearbeitungsschritten und eine vorgegebene Reihenfolge der Mehrzahl von Bearbeitungsschritten angibt,
wobei die Datenverarbeitungseinrichtung (231) derart ausgestaltet ist, dass, nach Auswahl einer Bearbeitungsschrittsequenz durch den Bediener, die Bearbeitungsschrittanwendungen (232A, 232B, 232C, 232D) der Bearbeitungsschrittsequenz und die jeweils zugeordneten Bearbeitungsschritte nur in der durch die Bearbeitungsschrittsequenz vorgegebenen Reihenfolge ohne Überspringen von Bearbeitungsschrittanwendungen (232A, 232B, 232C, 232D) ausgeführt werden, und
wobei die Mehrzahl von Bearbeitungsschritten insbesondere zumindest einen oder mehrere umfasst aus:
- einen der Bearbeitungsschrittsequenz zugeordneten Bearbeitungsauftrag annehmen,
- ein oder mehrere für den Bearbeitungsauftrag erforderliche Spannmittel an der Werkzeugmaschine rüsten bzw. vorbereiten,
- ein oder mehrere für den Bearbeitungsauftrag erforderliche Werkzeuge an der Werkzeugmaschine einrichten,
- ein oder mehrere für den Bearbeitungsauftrag erforderliche Werkzeuge an der Werkzeugmaschine laden bzw. vorbereiten,
- ein oder mehrere für den Bearbeitungsauftrag erforderliche NC-Codes, NC-Programme und/oder NC-Programmabschnitte laden und/oder programmieren,
- ein oder mehrere für den Bearbeitungsauftrag erforderliche NC-Codes, NC-Programme und/oder NC-Programmabschnitte ausführen,
- eine Prozessüberwachungsanwendung ausführen,
- einen oder mehrere dem Bearbeitungsauftrag zugeordnete Bearbeitungsprozesse dokumentieren,
- eine automatisierte Qualitätsprüfung eines oder mehrerer bearbeiteter Werkstücke durchführen,
- den Bearbeitungsauftrag abgeben,- automatisches Zusammenstellen von Werkstückpaletten,
- automatisiertes Beladen von Werkstückpaletten,
- automatisches Umsortieren von Werkstücken auf Werkstückpaletten,
- Einstellen einer Spannlage eines Werkstücks,
- Wechseln von einer Spannlage auf eine andere Spannlage,
- automatisches Vermessen von Werkstücken,
- automatisches Beladen eines Werkzeugmagazins der Werkzeugmaschine,
- automatisiertes Einrichten von Werkzeugen an der Werkzeugmaschine,
- automatisches Umsortieren von Werkzeugen am Werkzeugmagazin, und/oder
- Durchführen einer oder mehrerer Reinigungs- Wartungs-, Instandhaltungs- und/oder Serviceanwendungen an der Werkzeugmaschine.

2. Bedienvorrichtung (230) gemäß Anspruch 1, **dadurch gekennzeichnet, dass**
die Bearbeitungsschrittsequenzdaten für jeden Bearbeitungsschritt der Bearbeitungsschrittsequenz eine zugeordnete Bearbeitungsschrittanwendung (232A, 232B, 232C, 232D) angeben,
wobei die Datenverarbeitungseinrichtung (231) dazu eingerichtet ist, zum Steuern eines Bearbeitungsschritts die jeweils zugeordnete Bearbeitungsschrittanwendung (232A, 232B, 232C, 232D) auszuführen.

3. Bedienvorrichtung (230) gemäß einem der vorstehenden Ansprüche, **gekennzeichnet durch**
eine Netzwerkschnittstelle, die dazu eingerichtet ist, die Bedienvorrichtung (230) über ein Kommunikationsnetzwerk mit einem oder mehreren Servern zu verbinden.

4. Bedienvorrichtung (230) gemäß Ansprüchen 2 und 3, **dadurch gekennzeichnet, dass**
die Datenverarbeitungseinrichtung (231) dazu eingerichtet ist, wenn zumindest einer der Server das Ausführen von Bearbeitungsschrittanwendung (232A, 232B, 232C, 232D) als Webanwendungen gemäß einer Client-Server-Kommunikation bereitstellt, zum Steuern eines Bearbeitungsschritts die zugeordnete Bearbeitungsschrittanwendung (232A, 232B, 232C, 232D) als Webanwendung gemäß der Client-Server-Kommunikation mit dem zumindest einen Server über die Netzwerkschnittstelle auszuführen.

5. Bedienvorrichtung (230) gemäß Anspruch 3 oder 4, **dadurch gekennzeichnet, dass**
die Datenverarbeitungseinrichtung (231) dazu eingerichtet ist, zum Ausführen einer einem Bearbeitungsschritt der Bearbeitungsschrittsequenz zugeordneten Bearbeitungsschrittanwendung (232A, 232B, 232C, 232D) erforderliche Eingabeinformationen über die Benutzerschnittstelle (233) von dem Bediener abzufragen, insbesondere über eine graphische Benutzeroberfläche und/oder
jeder Bearbeitungsschrittanwendung (232A, 232B, 232C, 232D) eine separate Benutzeranwendung einer graphische Benutzeroberfläche zugeordnet ist, insbesondere eine jeweils separate Widget-Anwendung.

6. Bedienvorrichtung (230) gemäß einem der Ansprüche 3 bis 5, **dadurch gekennzeichnet, dass**
die Datenverarbeitungseinrichtung (231) dazu eingerichtet ist, zum Ausführen einer einem Bearbeitungsschritt der Bearbeitungsschrittsequenz zugeordneten Bearbeitungsschrittanwendung (232A, 232B, 232C, 232D) erforderliche Eingabedaten über die Netzwerkschnittstelle von einem oder mehreren Servern einzuholen bzw. zu laden, wobei die Eingabedaten insbesondere eines oder mehrere umfassen aus:
- Modelldaten, die ein CAD-Modell eines oder mehrerer Werkstücke, eines oder mehrerer Werkstückteile und/oder eines oder mehrerer Werkzeuge angeben,
- NC-Daten, die einen oder mehrere NC-Codes, ein oder mehrere NC-Programme und/oder einen oder mehrere NC-Programmabschnitte angeben,
- Auftragsdaten, die einer Werkstückbearbeitung zugeordnete Auftragsdaten angeben,
- Werkzeugdaten, die Informationen zu einem oder mehreren zugeordneten Werkzeugen angeben,
- Werkzeuglistendaten, die eine Liste von einem Bearbeitungsauftrag bzw. einer Werkstückbearbeitung zugeordneten Werkzeugen angeben,
- Spannmitteldaten, die Informationen zu einem oder mehreren zugeordneten Spannmitteln angeben, und/oder
- Spannmittellistendaten, die eine Liste von einem Bearbeitungsauftrag bzw. einer Werkstückbearbeitung zugeordneten Spannmitteln angeben.

7. Bedienvorrichtung (230) gemäß einem der vorstehenden Ansprüche, **dadurch gekennzeichnet, dass**
die Datenverarbeitungseinrichtung (231) dazu eingerichtet ist, vor Ausführen einer Bearbeitungsschrittsequenz zu überprüfen bzw. zu bestätigen, ob bzw. dass für jede den Bearbeitungsschritten jeweils zugeordnete Bearbeitungsschrittanwendung (232A, 232B, 232C, 232D) erforderliche Eingabedaten vorliegen, insbesondere durch erfolgte Eingabe des Bedieners, durch Vorliegen von ladbaren Eingabedaten und/oder durch Ausgabedaten einer vorher auszuführenden Bearbeitungsschrittanwendung (232A, 232B, 232C, 232D), und/oder
die Datenverarbeitungseinrichtung (231) dazu eingerichtet ist, vor Ausführen einer Bearbeitungsschrittsequenz zu überprüfen bzw. zu bestätigen, ob bzw. dass der Bediener die erforderliche Autorisierung aufweist für alle von Bearbeitungsschrittanwendung (232A, 232B, 232C, 232D) der Bearbeitungsschrittsequenz an der Steuereinrichtung aufzurufenden Steuer- und/oder Maschinenfunktionen.

8. Bedienvorrichtung (230) gemäß einem der vorstehenden Ansprüche, **dadurch gekennzeichnet, dass**
die Datenverarbeitungseinrichtung (231) dazu eingerichtet ist, eine durch den Bediener über die Benutzerschnittstelle (233) bedienbare Editor-Anwendung auszuführen, die dem Bediener das Erstellen, Speichern und/oder Ändern von Bearbeitungsschrittsequenzen erlaubt, und/oder
die Datenverarbeitungseinrichtung (231) dazu eingerichtet ist, vor Speichern einer Bearbeitungsschrittsequenz zu überprüfen bzw. zu bestätigen, ob bzw. dass für jede den Bearbeitungsschritten jeweils zugeordnete Bearbeitungsschrittanwendung (232A, 232B, 232C, 232D) erforderliche Eingabedaten vorliegen, insbesondere durch mögliche Eingabe des Bedieners, durch Vorliegen von ladbaren Eingabedaten und/oder durch Ausgabedaten einer vorher auszuführenden Bearbeitungsschrittanwendung (232A, 232B, 232C, 232D).

9. Bedienvorrichtung (230) gemäß einem der vorstehenden Ansprüche, **dadurch gekennzeichnet, dass**
die Bedienvorrichtung (230) als mobile Bedienvorrichtung (230) ausgebildet ist, die dazu eingerichtet ist, über die Steuerungsschnittstelle (235) drahtlos mit der Steuereinrichtung zu kommunizieren.

10. Steuervorrichtung zum Einsatz an einer numerisch gesteuerten Werkzeugmaschine mit einer Steuereinrichtung zum Steuern von Maschinenfunktionen der Werkzeugmaschine und einer mit der Steuereinrichtung verbundenen bzw. verbindbaren Bedienvorrichtung (230) gemäß einem der Ansprüche 1 bis 9.

11. Werkzeugmaschine mit einer Steuervorrichtung gemäß Anspruch 10.

12. Verfahren an einer Bedienvorrichtung (230) gemäß einem der Ansprüche 1 bis 9, umfassend:
Steuern eines Bearbeitungsauftrags zur Bearbeitung eines oder mehrerer Werkstücke an der Werkzeugmaschine auf Grundlage einer von dem Bediener über die Benutzerschnittstelle (233) anwählbaren Bearbeitungsschrittsequenz und auf Grundlagen von in einer Datenspeichervorrichtung gespeicherten Bearbeitungsschrittsequenzdaten, die der Bearbeitungsschrittsequenz zugeordnet sind, und
Aufrufen entsprechender Maschinen- bzw. Steuerfunktionen über die Steuerungsschnittstelle an der Steuereinrichtung, wobei
die Bearbeitungsschrittsequenzdaten eine Mehrzahl von Bearbeitungsschritten und eine vorgegebene Reihenfolge der Mehrzahl von Bearbeitungsschritten angibt,
wobei, nach Auswahl einer Bearbeitungsschrittsequenz durch den Bediener, die Bearbeitungsschrittanwendungen (232A, 232B, 232C, 232D) der Bearbeitungsschrittsequenz und die jeweils zugeordneten Bearbeitungsschritte nur in der durch die Bearbeitungsschrittsequenz vorgegebenen Reihenfolge ohne Überspringen von Bearbeitungsschrittanwendungen (232A, 232B, 232C, 232D) ausgeführt werden, und
wobei die Mehrzahl von Bearbeitungsschritten insbesondere zumindest einen oder mehrere umfasst aus:
- einen der Bearbeitungsschrittsequenz zugeordneten Bearbeitungsauftrag annehmen,
- ein oder mehrere für den Bearbeitungsauftrag erforderliche Spannmittel an der Werkzeugmaschine rüsten bzw. vorbereiten,
- ein oder mehrere für den Bearbeitungsauftrag erforderliche Werkzeuge an der Werkzeugmaschine einrichten,
- ein oder mehrere für den Bearbeitungsauftrag erforderliche Werkzeuge an der Werkzeugmaschine laden bzw. vorbereiten,
- ein oder mehrere für den Bearbeitungsauftrag erforderliche NC-Codes, NC-Programme und/oder NC-Programmabschnitte laden und/oder programmieren,
- ein oder mehrere für den Bearbeitungsauftrag erforderliche NC-Codes, NC-Programme und/oder NC-Programmabschnitte ausführen,
- eine Prozessüberwachungsanwendung ausführen,
- einen oder mehrere dem Bearbeitungsauftrag zugeordnete Bearbeitungsprozesse dokumentieren,
- eine automatisierte Qualitätsprüfung eines oder mehrerer bearbeiteter Werkstücke durchführen,
- den Bearbeitungsauftrag abgeben,- automatisches Zusammenstellen von Werkstückpaletten,
- automatisiertes Beladen von Werkstückpaletten,
- automatisches Umsortieren von Werkstücken auf Werkstückpaletten,
- Einstellen einer Spannlage eines Werkstücks,
- Wechseln von einer Spannlage auf eine andere Spannlage,
- automatisches Vermessen von Werkstücken,
- automatisches Beladen eines Werkzeugmagazins der Werkzeugmaschine,
- automatisiertes Einrichten von Werkzeugen an der Werkzeugmaschine,
- automatisches Umsortieren von Werkzeugen am Werkzeugmagazin, und/oder
- Durchführen einer oder mehrerer Reinigungs- Wartungs-, Instandhaltungs- und/oder Serviceanwendungen an der Werkzeugmaschine.

13. Computerprogrammprodukt, umfassend Befehle, die bei der Ausführung des Programms durch einen mit einer numerisch gesteuerten Werkzeugmaschine verbundenen Computer bzw. eine Steuervorrichtung einer numerisch gesteuerten Werkzeugmaschine diesen bzw. diese veranlassen, das Verfahren gemäß Anspruch 12 auszuführen.

## Claims

1. Operating device (230) for use on a numerically controlled machine tool, comprising:
a data processing device (231) which is configured in particular to execute control and operating applications,
a control interface (235) via which the data processing device (231) can be communicatively connected to a control device of the machine tool, and
a user interface (233) which is configured to accept input information according to operating inputs of an operator of the machine tool and to transmit it to the data processing device (231) and/or to output output information transmitted by the data processing device (231) to the operator,
wherein the data processing device (231) is configured to control a machining job for machining one or more workpieces on the machine tool on the basis of a machining step sequence which can be selected by the operator via the user interface (233) and to call up corresponding machine or control functions on the control device via the control interface,
the data processing device (231) is configured to control the machining job on the basis of machining step sequence data which are stored in a data storage device of the operating device and which are assigned to the machining step sequence, wherein
the machining step sequence data specify a plurality of machining steps and a predefined order of the plurality of machining steps,
wherein the data processing device (231) is configured such that, after selection of a machining step sequence by the operator, the machining step applications (232A, 232B, 232C, 232D) of the machining step sequence and the respectively assigned machining steps are executed only in the order predefined by the machining step sequence without skipping machining step applications (232A, 232B, 232C, 232D), and
wherein the plurality of machining steps comprises in particular at least one or more of:
- accept a machining job assigned to the machining step sequence,
- equip or prepare one or more clamping means required for the machining job on the machine tool,
- set up one or more tools required for the machining job on the machine tool,
- load or prepare one or more tools required for the machining job on the machine tool,
- load and/or program one or more NC codes, NC programs and/or NC program sections required for the machining job,
- execute one or more NC codes, NC programs and/or NC program sections required for the machining job,
- execute a process monitoring application,
- document one or more machining processes assigned to the machining job,
- carry out an automated quality check of one or more machined workpieces,
- submit the machining job,
- automatically assemble workpiece pallets,
- automatically load workpiece pallets,
- automatically re-sort workpieces to workpiece pallets,
- set a clamping position of a workpiece,
- change from one clamping position to another clamping position,
- automatically measure workpieces,
- automatically load a tool magazine of the machine tool,
- automatically set up tools on the machine tool,
- automatically re-sort tools on the tool magazine, and/or
- carry out one or more cleaning, maintenance, repair and/or service applications on the machine tool.

2. Operating device (230) according to Claim 1, **characterized in that**
the machining step sequence data specify an assigned machining step application (232A, 232B, 232C, 232D) for each machining step of the machining step sequence,
wherein the data processing device (231) is configured to execute the respectively assigned machining step application (232A, 232B, 232C, 232D) in order to control a machining step.

3. Operating device (230) according to either of the preceding claims, **characterized by**
a network interface which is configured to connect the operating device (230) to one or more servers via a communication network.

4. Operating device (230) according to Claims 2 and 3, **characterized in that**
the data processing device (231) is configured, when at least one of the servers provides the execution of machining step applications (232A, 232B, 232C, 232D) as web applications according to client-server communication, to execute the machining step application (232A, 232B, 232C, 232D) assigned to a machining step as a web application according to the client-server communication with the at least one server via the network interface in order to control said machining step.

5. Operating device (230) according to Claim 3 or 4, **characterized in that**
the data processing device (231) is configured to query input information required for executing a machining step application (232A, 232B, 232C, 232D) assigned to a machining step of the machining step sequence from the operator via the user interface (233), in particular via a graphical user interface, and/or
each machining step application (232A, 232B, 232C, 232D) is assigned a separate user application of a graphical user interface, in particular a respectively separate widget application.

6. Operating device (230) according to one of Claims 3 to 5, **characterized in that** the data processing device (231) is configured to collect or load input data required for executing a machining step application (232A, 232B, 232C, 232D) assigned to a machining step of the machining step sequence from one or more servers via the network interface, wherein the input data comprise in particular one or more of:
- model data which specify a CAD model of one or more workpieces, one or more workpiece parts and/or one or more tools,
- NC data which specify one or more NC codes, one or more NC programs and/or one or more NC program sections,
- job data which specify job data assigned to workpiece machining,
- tool data which specify information relating to one or more assigned tools,
- tool list data which specify a list of tools assigned to a machining job or workpiece machining,
- clamping means data which specify information relating to one or more assigned clamping means, and/or
- clamping means list data which specify a list of clamping means assigned to a machining job or workpiece machining.

7. Operating device (230) according to one of the preceding claims, **characterized in that**
the data processing device (231) is configured to check or confirm, before executing a machining step sequence, if / whether input data required for each machining step application (232A, 232B, 232C, 232D) respectively assigned to the machining steps are present, in particular by the operator having been input, by the presence of loadable input data and/or by output data of a machining step application (232A, 232B, 232C, 232D) to be executed beforehand, and/or
the data processing device (231) is configured to check or confirm, before executing a machining step sequence, if / whether the operator has the required authorization for all control and/or machine functions to be called up by machining step application (232A, 232B, 232C, 232D) of the machining step sequence at the control device.

8. Operating device (230) according to one of the preceding claims, **characterized in that**
the data processing device (231) is configured to execute an editor application which can be operated by the operator via the user interface (233) and which allows the operator to create, store and/or change machining step sequences, and/or
the data processing device (231) is configured to check or confirm, before storing a machining step sequence, if / whether input data required for each machining step application (232A, 232B, 232C, 232D) respectively assigned to the machining steps are present, in particular by possible input by the operator, by the presence of loadable input data and/or by output data of a machining step application (232A, 232B, 232C, 232D) to be executed beforehand.

9. Operating device (230) according to one of the preceding claims, **characterized in that**
the operating device (230) is designed as a mobile operating device (230) which is configured to communicate wirelessly with the control device via the control interface (235).

10. Control device for use on a numerically controlled machine tool, comprising a control device for controlling machine functions of the machine tool and an operating device (230) according to one of Claims 1 to 9 which is connected or can be connected to the control device.

11. Machine tool comprising a control device according to Claim 10.

12. Method on an operating device (230) according to one of Claims 1 to 9, comprising:
controlling a machining job for machining one or more workpieces on the machine tool on the basis of a machining step sequence which can be selected by the operator via the user interface (233) and on the basis of machining step sequence data which are stored in a data storage device and which are assigned to the machining step sequence, and
calling up corresponding machine or control functions on the control device via the control interface, wherein
the machining step sequence data specify a plurality of machining steps and a predefined order of the plurality of machining steps,
wherein, after selection of a machining step sequence by the operator, the machining step applications (232A, 232B, 232C, 232D) of the machining step sequence and the respectively assigned machining steps are executed only in the order predefined by the machining step sequence without skipping machining step applications (232A, 232B, 232C, 232D), and
wherein the plurality of machining steps comprises in particular at least one or more of:
- accept a machining job assigned to the machining step sequence,
- equip or prepare one or more clamping means required for the machining job on the machine tool,
- set up one or more tools required for the machining job on the machine tool,
- load or prepare one or more tools required for the machining job on the machine tool,
- load and/or program one or more NC codes, NC programs and/or NC program sections required for the machining job,
- execute one or more NC codes, NC programs and/or NC program sections required for the machining job,
- execute a process monitoring application,
- document one or more machining processes assigned to the machining job,
- carry out an automated quality check of one or more machined workpieces,
- submit the machining job,
- automatically assemble workpiece pallets,
- automatically load workpiece pallets,
- automatically re-sort workpieces to workpiece pallets,
- set a clamping position of a workpiece,
- change from one clamping position to another clamping position,
- automatically measure workpieces,
- automatically load a tool magazine of the machine tool,
- automatically set up tools on the machine tool,
- automatically re-sort tools on the tool magazine, and/or
- carry out one or more cleaning, maintenance, repair and/or service applications on the machine tool.

13. Computer program product comprising commands which, when the program is executed by a computer connected to a numerically controlled machine tool or a control device of a numerically controlled machine tool, cause said computer or said control device to carry out the method according to Claim 12.

## Revendications

1. Dispositif de commande (230) destiné à être utilisé sur une machine-outil à commande numérique, comprenant :
un dispositif de traitement de données (231) qui est conçu en particulier pour exécuter des applications de commande et de commande,
une interface de commande (235) par l'intermédiaire de laquelle le dispositif de traitement de données (231) peut être relié en communication à un dispositif de commande de la machine-outil, et
une interface utilisateur (233) qui est conçue pour accepter des informations d'entrée selon des entrées de commande d'un opérateur de la machine-outil et pour les transmettre au dispositif de traitement de données (231) et/ou pour délivrer à l'opérateur des informations de sortie transmises par le dispositif de traitement de données (231),
le dispositif de traitement de données (231) étant conçu pour commander une tâche d'usinage pour l'usinage d'une ou de plusieurs pièces à usiner sur la machine-outil sur la base d'une séquence d'étapes d'usinage pouvant être sélectionnée par l'opérateur par l'intermédiaire de l'interface utilisateur (233) et pour appeler des fonctions de machine ou de commande correspondantes sur le dispositif de commande par l'intermédiaire de l'interface de commande,
le dispositif de traitement de données (231) étant conçu pour commander la tâche d'usinage sur la base de données de séquence d'étapes d'usinage mémorisées dans un dispositif de mémorisation de données du dispositif de commande, lesquelles sont associées à la séquence d'étapes d'usinage,
les données de séquence d'étapes d'usinage indiquant une pluralité d'étapes d'usinage et un ordre prédéfini de la pluralité d'étapes d'usinage,
le dispositif de traitement de données (231) étant conçu de telle sorte que, après sélection d'une séquence d'étapes d'usinage par l'opérateur, les applications d'étapes d'usinage (232A, 232B, 232C, 232D) de la séquence d'étapes d'usinage et les étapes d'usinage respectivement associées ne soient exécutées que dans l'ordre prédéfini par la séquence d'étapes d'usinage sans sauter des applications d'étapes d'usinage (232A, 232B, 232C, 232D), et
la pluralité d'étapes d'usinage comprenant en particulier au moins une ou plusieurs parmi :
- accepter une tâche d'usinage associée à la séquence d'étapes d'usinage,
- équiper ou préparer un ou plusieurs moyens de serrage nécessaires pour la tâche d'usinage sur la machine-outil,
- installer un ou plusieurs outils nécessaires pour la tâche d'usinage sur la machine-outil,
- charger ou préparer un ou plusieurs outils nécessaires pour la tâche d'usinage sur la machine-outil,
- charger et/ou programmer un ou plusieurs codes CN, programmes CN et/ou sections de programme CN nécessaires pour la tâche d'usinage,
- exécuter un ou plusieurs codes CN, programmes CN et/ou sections de programme CN nécessaires pour la tâche d'usinage,
- exécuter une application de surveillance de processus,
- documenter un ou plusieurs processus d'usinage associés à la tâche d'usinage,
- effectuer un contrôle de qualité automatisé d'une ou plusieurs pièces usinées,
- délivrer la tâche d'usinage,
- assembler automatiquement des palettes de pièces,
- charger automatiquement des palettes de pièces,
- retrier automatiquement des pièces sur des palettes de pièces,
- régler une position de serrage d'une pièce,
- passer d'une position de serrage à une autre position de serrage,
- mesurer automatiquement des pièces,
- charger automatiquement un magasin d'outils de la machine-outil,
- installer automatiquement des outils sur la machine-outil,
- retrier automatiquement des outils sur le magasin d'outils, et/ou
- effectuer une ou plusieurs applications de nettoyage, d'entretien, de maintenance et/ou de service sur la machine-outil.

2. Dispositif de commande (230) selon la revendication 1, **caractérisé en ce que**
les données de séquence d'étapes d'usinage indiquent, pour chaque étape d'usinage de la séquence d'étapes d'usinage, une application d'étape d'usinage associée (232A, 232B, 232C, 232D),
le dispositif de traitement de données (231) étant conçu pour exécuter, pour commander une étape d'usinage, l'application d'étape d'usinage associée respective (232A, 232B, 232C, 232D).

3. Dispositif de commande (230) selon l'une quelconque des revendications précédentes, **caractérisé par**
une interface de réseau qui est conçue pour relier le dispositif de commande (230) à un ou plusieurs serveurs par le biais d'un réseau de communication.

4. Dispositif de commande (230) selon les revendications 2 et 3, **caractérisé en ce que**
le dispositif de traitement de données (231) est conçu pour exécuter, lorsqu'au moins l'un des serveurs met à disposition l'exécution d'applications d'étape d'usinage (232A, 232B, 232C, 232D) en tant qu'applications Web selon une communication client-serveur, pour commander une étape d'usinage, l'application d'étape d'usinage associée (232A, 232B, 232C, 232D) en tant qu'application Web selon la communication client-serveur avec l'au moins un serveur par le biais de l'interface de réseau.

5. Dispositif de commande (230) selon la revendication 3 ou 4, **caractérisé en ce que**
le dispositif de traitement de données (231) est conçu pour demander à l'opérateur, par le biais de l'interface utilisateur (233), des informations d'entrée nécessaires pour exécuter une application d'étape d'usinage (232A, 232B, 232C, 232D) associée à une étape d'usinage de la séquence d'étapes d'usinage, en particulier par le biais d'une interface utilisateur graphique, et/ou
une application utilisateur séparée d'une interface utilisateur graphique est associée à chaque application d'étape d'usinage (232A, 232B, 232C, 232D), en particulier une application de gadget logiciel séparée respective.

6. Dispositif de commande (230) selon l'une quelconque des revendications 3 à 5, **caractérisé en ce que**
le dispositif de traitement de données (231) est conçu pour collecter ou charger des données d'entrée nécessaires pour exécuter une application d'étape d'usinage (232A, 232B, 232C, 232D) associée à une étape d'usinage de la séquence d'étapes d'usinage par le biais de l'interface de réseau à partir d'un ou de plusieurs serveurs, les données d'entrée comprenant en particulier une ou plusieurs parmi :
- des données de modèle qui indiquent un modèle de CAO d'une ou de plusieurs pièces, d'une ou de plusieurs parties de pièce et/ou d'un ou de plusieurs outils,
- des données CN qui indiquent un ou plusieurs codes CN, un ou plusieurs programmes CN et/ou une ou plusieurs parties de programme CN,
- des données de tâche qui indiquent des données de tâche associées à un usinage de pièce,
- des données d'outil qui indiquent des informations concernant un ou plusieurs outils associés,
- des données de liste d'outils qui indiquent une liste d'outils associés à une tâche d'usinage ou à un usinage de pièce,
- des données de moyens de serrage qui indiquent des informations concernant un ou plusieurs moyens de serrage associés, et/ou
- des données de liste de moyens de serrage qui indiquent une liste de moyens de serrage associés à une tâche d'usinage ou à un usinage de pièce.

7. Dispositif de commande (230) selon l'une quelconque des revendications précédentes, **caractérisé en ce que**
le dispositif de traitement de données (231) est conçu pour vérifier ou confirmer avant l'exécution d'une séquence d'étapes d'usinage si ou que des données d'entrée nécessaires sont présentes pour chaque application d'étape d'usinage (232A, 232B, 232C, 232D) associée respectivement aux étapes d'usinage, en particulier par une entrée effectuée par l'opérateur, par la présence de données d'entrée pouvant être chargées et/ou par des données de sortie d'une application d'étape d'usinage (232A, 232B, 232C, 232D) à exécuter précédemment, et/ou
le dispositif de traitement de données (231) est conçu pour vérifier ou confirmer avant l'exécution d'une séquence d'étapes d'usinage si ou que l'opérateur présente l'autorisation nécessaire pour toutes les fonctions de commande et/ou machine à appeler par l'application d'étape d'usinage (232A, 232B, 232C, 232D) de la séquence d'étapes d'usinage au niveau du dispositif de commande.

8. Dispositif de commande (230) selon l'une quelconque des revendications précédentes, **caractérisé en ce que**
le dispositif de traitement de données (231) est conçu pour exécuter une application d'éditeur pouvant être commandée par l'opérateur par le biais de l'interface utilisateur (233), qui permet à l'opérateur d'établir, de stocker et/ou de modifier des séquences d'étapes d'usinage, et/ou
le dispositif de traitement de données (231) est conçu pour vérifier ou confirmer avant le stockage d'une séquence d'étapes d'usinage si ou que des données d'entrée nécessaires sont présentes pour chaque application d'étape d'usinage (232A, 232B, 232C, 232D) associée respectivement aux étapes d'usinage, en particulier par une entrée possible de l'opérateur, par la présence de données d'entrée pouvant être chargées et/ou par des données de sortie d'une application d'étape d'usinage (232A, 232B, 232C, 232D) à exécuter précédemment.

9. Dispositif de commande (230) selon l'une quelconque des revendications précédentes, **caractérisé en ce que**
le dispositif de commande (230) est réalisé sous forme de dispositif de commande mobile (230) qui est conçu pour communiquer sans fil avec le dispositif de commande par le biais de l'interface de commande (235).

10. Dispositif de commande destiné à être utilisé sur une machine-outil à commande numérique comprenant un dispositif de commande pour commander des fonctions de machine de la machine-outil et un dispositif de commande (230) selon l'une quelconque des revendications 1 à 9 relié ou pouvant être relié au dispositif de commande.

11. Machine-outil comprenant un dispositif de commande selon la revendication 10.

12. Procédé sur un dispositif de commande (230) selon l'une quelconque des revendications 1 à 9, comprenant :
la commande d'une tâche d'usinage pour l'usinage d'une ou de plusieurs pièces à usiner sur la machine-outil sur la base d'une séquence d'étapes d'usinage pouvant être sélectionnée par l'opérateur par l'intermédiaire de l'interface utilisateur (233) et sur la base de données de séquence d'étapes d'usinage mémorisées dans un dispositif de mémorisation de données, lesquelles sont associées à la séquence d'étapes d'usinage, et
l'appel de fonctions de machine ou de commande correspondantes sur le dispositif de commande par l'intermédiaire de l'interface de commande,
les données de séquence d'étapes d'usinage indiquant une pluralité d'étapes d'usinage et un ordre prédéfini de la pluralité d'étapes d'usinage,
après sélection d'une séquence d'étapes d'usinage par l'opérateur, les applications d'étapes d'usinage (232A, 232B, 232C, 232D) de la séquence d'étapes d'usinage et les étapes d'usinage respectivement associées ne étant exécutées que dans l'ordre prédéfini par la séquence d'étapes d'usinage sans sauter des applications d'étapes d'usinage (232A, 232B, 232C, 232D), et
la pluralité d'étapes d'usinage comprenant en particulier au moins une ou plusieurs parmi :
- accepter une tâche d'usinage associée à la séquence d'étapes d'usinage,
- équiper ou préparer un ou plusieurs moyens de serrage nécessaires pour la tâche d'usinage sur la machine-outil,
- installer un ou plusieurs outils nécessaires pour la tâche d'usinage sur la machine-outil,
- charger ou préparer un ou plusieurs outils nécessaires pour la tâche d'usinage sur la machine-outil,
- charger et/ou programmer un ou plusieurs codes CN, programmes CN et/ou parties de programme CN nécessaires pour la tâche d'usinage,
- exécuter un ou plusieurs codes CN, programmes CN et/ou parties de programme CN nécessaires pour la tâche d'usinage,
- exécuter une application de surveillance de processus,
- documenter un ou plusieurs processus d'usinage associés à la tâche d'usinage,
- effectuer un contrôle de qualité automatisé d'une ou de plusieurs pièces usinées,
- délivrer la tâche d'usinage,
- assembler automatiquement des palettes de pièces,
- charger automatiquement des palettes de pièces,
- retrier automatiquement des pièces sur des palettes de pièces,
- régler une position de serrage d'une pièce,
- passer d'une position de serrage à une autre position de serrage,
- mesurer automatiquement des pièces,
- charger automatiquement un magasin d'outils de la machine-outil,
- installer automatiquement des outils sur la machine-outil,
- retrier automatiquement des outils sur le magasin d'outils, et/ou
- effectuer une ou plusieurs applications de nettoyage, d'entretien, de maintenance et/ou de service sur la machine-outil.

13. Produit de programme informatique, comprenant des instructions qui, lors de l'exécution du programme par un ordinateur relié à une machine-outil à commande numérique ou un dispositif de commande d'une machine-outil à commande numérique, amènent celui-ci ou ceux-ci à exécuter le procédé selon la revendication 12.
